(19) **Europäisches Patentamt**
**European Patent Office**
**Office européen des brevets**

(11) **EP 1 996 412 B1**

(12) **EUROPÄISCHE PATENTSCHRIFT**

(45) Veröffentlichungstag und Bekanntmachung des Hinweises auf die Patenterteilung:
**13.01.2016 Patentblatt 2016/02**

(51) Int Cl.:
***B60C 15/06*** (2006.01)

(21) Anmeldenummer: **07702978.3**

(22) Anmeldetag: **24.01.2007**

(86) Internationale Anmeldenummer:
**PCT/EP2007/000569**

(87) Internationale Veröffentlichungsnummer:
**WO 2007/104378 (20.09.2007 Gazette 2007/38)**

(54) **FAHRZEUGLUFTREIFEN MIT VERSTÄRKTEM WULST**

VEHICLE TYRE WITH A REINFORCED TYRE BEAD

PNEU DE VÉHICULE À TALON RENFORCÉ

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **10.03.2006 DE 102006011158**

(43) Veröffentlichungstag der Anmeldung:
**03.12.2008 Patentblatt 2008/49**

(73) Patentinhaber: **Continental Reifen Deutschland GmbH**
**30165 Hannover (DE)**

(72) Erfinder:
• **KRAUS, Martin, Josef**
**30167 Hannover (DE)**
• **MAZUR, Heinz-Bernhard**
**30900 Wedemark (DE)**

(74) Vertreter: **Finger, Karsten et al**
**Continental Aktiengesellschaft**
**Patente und Lizenzen**
**Postfach 169**
**30001 Hannover (DE)**

(56) Entgegenhaltungen:
**WO-A-2006/094947     US-A1- 2002 189 738**

**Beschreibung**

Die Erfindung betrifft einen Fahrzeugreifen - insbesondere Fahrzeugluftreifen - mit einem Laufstreifen, mit einem radial innerhalb des Laufstreifens ausgebildeten Wulstbereich mit Wulstkern zur Sicherung des Fahrzeugreifens auf einer korrespondierend ausgebildeten Sitzfläche einer Felge - insbesondere mit radial außerhalb des Wulstkerns ausgebildetem Kernreiter - und mit einer Wulstverstärkungslage, die in dem Befestigungsbereich ausgebildet ist, wobei die Wulstverstärkungslage über den Umfang des Fahrzeugreifens erstreckt und mit wenigstens einem spiralig von radial innen nach radial außen ausgebildeten in Umfangsrichtung gewickelt angeordneten Festigkeitsträger ausgebildet ist.

Derartige Fahrzeugreifen sind beispielsweise aus der EP 1174289A2 und aus der EP1129870B1 bekannt. Die Ausbildung ermöglicht zwar die Nutzung großer Vorteile bezüglich der hohen Zugfestigkeit in Umfangsrichtung im Nahbereich zur Sitzfläche des Fahrzeugreifens auf der Felge, wodurch eine hohe Sitzsicherheit erzielt werden kann. Dennoch ist die Herstellung dieser Fahrzeugreifen mit Wulstverstärkungslage, die neben der um den Wulstkern umgeschlagenen Karkasse im fertigen Reifenzustand zusätzlich zum Wulstkern und dem Kernreiter angeordnet und wenigstens einen spiralig von radial innen nach radial außen ausgebildete in Umfangsrichtung gewickelt angeordneten Festigkeitsträger aufweist, schwierig. Die spiralige Wicklung muss entweder im torusförnnig aufgebauten Rohlingszustand erfolgen oder ein Aufbau muss bei herkömmlichem flachem Aufbau auf einer Aufbautrommel erfolgen, wobei dann entgegen den Zugkräften der Festigkeitsträger die flach aufgespulte Wulstverstärkungslage bei der anschließenden Bombierung des Reifenrohlings mit erhoben werden muss. In beiden Fällen besteht die Gefahr einer Trennung von Wulstkern/Kernreiter und Wulstverstärker einerseits und Wulstverstärker und Karkasse andererseits. Die Zugkräfte und damit bedingte Einschnürungen belasten auch das umgebende Material, so dass auch zwischen diesem und dem Wulstkern ungewünschte Scherwirkungen und eventuelle Beschädigungen auftreten können. Daher ist erhöhter Aufwand erforderlich, um Beschädigungen zu vermeiden bzw. um zu verhindern, dass eventuell beschädigte Reifenrohlinge vulkanisiert werden. Darüber hinaus können die in Umfangsrichtung gewickelten Festigkeitsträger der Wulstverstärkungslage in allen Belastungszuständen mit hohen Zugkräften während der Herstellung und während des Betriebes des Fahrzeugreifens in das Gummimaterial des Wulstkerns einschneiden. Dies erfordert einen großen zusätzlichen Aufwand zur Reduzierung des Risikos von Beschädigungen und zur sicheren Auslese eventuell beschädigter Fahrzeugreifen. Eine eventuell beabsichtigte Trennung der unter diesen Belastungen zusammengewachsenen Bauteile ist sowohl vor als auch nach der Vulkanisation kaum - und wenn nur mit großem Aufwand - möglich.

**Aus der** US 2002/189 738 A1 **ist ein Fahrzeugluftreifen gemäß den Merkmalen des Oberbegriffs von Anspruch 1 bekannt.**

Der Erfindung liegt daher die Aufgabe zugrunde mit einfachen Mitteln und hoher Zuverlässigkeit einen Fahrzeugreifen - insbesondere Fahrzeugluftreifen - mit einem Laufstreifen, mit einem radial innerhalb des Laufstreifens ausgebildeten Wulstbereich mit Wulstkern zur Sicherung des Fahrzeugreifens auf einer korrespondierend ausgebildeten / Sitzfläche einer Felge - insbesondere mit radial außerhalb des Wulstkerns ausgebildetem Kernreiter - und mit einer Wulstverstärkungslage, die in dem Befestigungsbereich ausgebildet ist, wobei die Wulstverstärkungslage über den Umfang des Fahrzeugreifens erstreckt und mit wenigstens einem spiralig von radial innen nach radial außen ausgebildeten in Umfangsrichtung gewickelt angeordneten Festigkeitsträger ausgebildet ist, zu schaffen.

Erfindungsgemäß wird die Aufgabe durch die Ausbildung eines Fahrzeugreifensinsbesondere Fahrzeugluftreifens - mit einem Laufstreifen, mit einem radial innerhalb des Laufstreifens ausgebildeten Wulstbereich mit Wulstkern zur Sicherung des Fahrzeugreifens auf einer korrespondierend ausgebildeten Sitzfläche einer Felge - insbesondere mit radial außerhalb des Wulstkerns ausgebildetem Kernreiter - und mit einer Wulstverstärkungslage, die in dem Befestigungsbereich ausgebildet ist, wobei die Wulstverstärkungslage über den Umfang des Fahrzeugreifens erstreckt und mit wenigstens einem spiralig von radial innen nach radial außen ausgebildeten in Umfangsrichtung gewickelt angeordneten Festigkeitsträger ausgebildet ist, gemäß den Merkmalen von Anspruch 1 gelöst, **bei dem der Verstärkungsstreifen mit einem ersten Verstärkungsstreifen und mit einem zweiten Verstärkungsstreifen ausgebildet ist und** bei dem radial innerhalb des Wulstkerns wenigstens ein weiterer - insbesondere über den gesamten Umfang des Fahrzeugreifens erstreckter - Wulstverstärkungsstreifen ausgebildet ist, der sich in axialer Richtung über die gesamte axiale Erstreckung des Wulstkerns erstreckt und der zu beiden axialen Außenseiten des Wulstkerns jeweils nach radial außen umgeschlagen ist, wobei der erste Umschlag sich bis in eine radiale Erstreckungshöhe $H_{F1}$ vom Felgeneckpunkt X und der zweite Umschlag bis in eine radiale Erstreckungshöhe $H_{F2}$ vom Felgeneckpunkt X erstreckt, wobei die Wulstverstärkungslage zwischen dem ersten Umschlag eines ersten Verstärkungsstreifens und dem ersten Umschlag eines zweiten Verstärkungsstreifens ausgebildet ist. Durch den Wulstverstärkungsstreifen kann der Wulstkern und die Karkasse vor ungewünscht hohen zwischen Karkasse und Wulstkern wirkenden Belastungen, die über die Zugspannungen der Wulstverstärkungslage und der Karkasse induziert werden können, geschützt werden. Hierdurch wird der Wulstbereich vor unerwünschten Folgen durch zu hohe Zugspannungen der Festigkeitsträger der Wulstverstärkungslage besser geschützt. Risiken der Beschädigung aufgrund der durch die Zugspannungen induzierten hohen Belastung können sowohl in der Herstellung als auch im Betrieb des Fahrzeugreifens hierdurch reduziert werden. Die im Festigkeitsträger der Wulstverstärkungslage geleistete Arbeit wird durch die Ausbildung reduziert. Darüber hinaus kann dauerhaft die Karkasse von der Wulstverstärkungslage getrennt werden. Die beiden Verstärkungsstreifen wirken wie eine Schutzkappe, die die Verstärkungslage von Karkasse und Wulstkern mit gegebenenfalls Kernreiter sicher und schützend trennt. Hierdurch ist ein maximaler Schutz vor "wandernden" Festigkeitsträgern oder Elementen von Festigkeitsträgern aus der Verstärkungslage bei Herstellung und im Betrieb des Fahrzeugreifens möglich.

Besonders vorteilhaft ist die Ausbildung gemäß den Merkmalen von Anspruch 2, wobei sowohl die radiale Erstreckungshöhe $H_{F1}$ vom Felgeneckpunkt X als auch die radiale Erstreckungshöhe $H_{F2}$ vom Felgeneckpunkt X radial außerhalb des radialen Abstandes der radial äußeren Erstreckung des Wulstkerns vom Felgeneckpunkt X ausgebildet ist. Dies ermöglicht eine vollständige, zuverlässige Schutzwirkung bis in den kritischen Übergangsbereich zwischen Reifenseitenwand und Wulstkern.

Besonders vorteilhaft ist die Ausbildung gemäß den Merkmalen von Anspruch 3, wobei der erste Umschlag **des ersten Verstärkungsstreifens** axial benachbart zur Wulstverstärkungslage ausgebildet ist. Hierdurch wird erreicht, dass der Wulstverstärkungsstreifen sehr zuverlässig ungewünschte Belastungen, die durch sehr hohe Zugkräfte von den Festigkeitsträgern der Wulstverstärkungslage in die benachbarten Wulstbereiche induziert werden aufnimmt und das Risiko von Beschädigungen weiter reduziert. Dies kann besonders sicher und zuverlässig durch die Ausbildung gemäß den Merkmalen von Anspruch 4 gewährleistet werden, bei der der erste Umschlag **des ersten Verstärkungsstreifens** in direktem Berührkontakt zur Wulstverstärkungslage ausgebildet ist.

Besonders vorteilhaft ist die Ausbildung gemäß den Merkmalen von Anspruch 5, wobei der erste Umschlag **des ersten Verstärkungsstreifens** zumindest radial innerhalb des Wulstkerns in direktem Berührkontakt zum Wulstkern ausgebildet ist. Dies ermöglicht einen besonders zuverlässigen Schutz des Wulstkerns bei Sicherstellung einer vergleichmäßigten Krafteinleitung in den Wulstkern.

Besonders vorteilhaft ist die Ausbildung gemäß den Merkmalen von Anspruch 6, wobei der erste Umschlag **des ersten Verstärkungsstreifens** in direktem Berührkontakt zum Wulstkern und zum Kernreiter ausgebildet ist. Dies ermöglicht einen besonders zuverlässigen Schutz sowohl des Wulstkerns als auch des Kernreiters bei Sicherstellung einer zuverlässigen vergleichmäßigten Krafteinleitung in den Wulstkern.

Besonders vorteilhaft ist die Ausbildung gemäß den Merkmalen von Anspruch 7, wobei der zweite Umschlag **des ersten Verstärkungsstreifens** in direktem Berührkontakt zum Wulstkern und zum Kernreiter ausgebildet ist. Dies ermöglicht einen besonders zuverlässigen Schutz sowohl des Wulstkerns als auch des Kernreiters bei Sicherstellung einer zuverlässigen vergleichmäßigten Krafteinleitung in den Wulstkern.

Besonders vorteilhaft ist die Ausbildung gemäß den Merkmalen von Anspruch 8, wobei der erste Umschlag **des ersten Verstärkungsstreifens** auf der axialen Innenseite des Wulstkerns im Fahrzeugreifen angeordnet ist. Hierdurch kann in einfacher Weise eine sichere Trennung der Karkasse vom Wulstkern in diesem Bereich des Wulstes und eine Vergleichmäßigung der Kräfte zwischen Karkasse und Wulstkern sowie zwischen Wulstverstärkungslage und Wulstkern ermöglicht werden. Der untere Wulstbereich kann in einfacher Weise zur Verminderung der durch die Reifeneinfederung bedingten Kräfte und kinematischen Änderungen in diesem Wulstbereich versteift werden.

Besonders vorteilhaft ist die Ausbildung gemäß den Merkmalen von Anspruch 9, wobei der erste Umschlag **des ersten Verstärkungsstreifens** zwischen der Wulstverstärkungslage und dem Wulstkern ausgebildet ist. Der untere Wulstbereich kann auf diese Weise besonders einfach und zuverlässig zur Verminderung der durch die Reifeneinfederung bedingten Kräfte und kinematischen Änderungen in diesem Wulstbereich versteift werden. Direkt oder indirekt können die Kräfte im unteren Wulstbereich zwischen Karkasse und Wulstverstärkungslage, zwischen Karkasse und Wulstkern und zwischen Wulstverstärkungslage und Wulstkern vergleichmäßigt werden.

Besonders vorteilhaft ist die Ausbildung gemäß den Merkmalen von Anspruch 10, wobei die Wulstverstärkungslage zwischen dem ersten Umschlag **des zweiten Verstärkungsstreifens** und dem Wulstkern ausgebildet ist. Der untere Wulstbereich kann auf diese Weise besonders einfach und zuverlässig zur Verminderung der durch die Reifeneinfederung bedingten Kräfte und kinematischen Änderungen in diesem Wulstbereich versteift werden. Direkt oder indirekt können die Kräfte im unteren Wulstbereich zwischen Karkasse und Wulstverstärkungslage, zwischen Karkasse und Wulstkern und zwischen Wulstverstärkungslage und Wulstkern vergleichmäßigt werden.

Besonders vorteilhaft ist die Ausbildung gemäß den Merkmalen von Anspruch 11, wobei der weitere Wulstverstärkungsstreifen aus einer Lage von in Kautschuk oder Gummi eingebetteten - insbesondere textilen - Festigkeitsträgern ausgebildet ist. dies ermöglicht eine geringe Schichtdicke des Wulstverstärkungsstreifens, eine Vereinfachung der Konfektionierbarkeit und eine Reduktion der Kosten.

Besonders vorteilhaft ist die Ausbildung gemäß den Merkmalen von Anspruch **12**, wobei die Festigkeitsträger unter einen Steigungswinkel von 35 ° bis 55 ° zur Umfangsrichtung des Reifens verlaufend ausgebildet sind. Dies dient einer dauerhaften, sich über das Reifenleben erstreckenden Trennung der Bauteile und einer dauerhaften Vergleichmäßigung der eingeleiteten Kräfte beim Durchlaufen der Bodenaufstandsfläche.

Besonders vorteilhaft ist die Ausbildung gemäß den Merkmalen von Anspruch **13**, wobei die Wulstverstärkungslage mit wenigstens einem spiralig von radial innen nach radial außen ausgebildeten in Umfangsrichtung gewickelt angeordneten Festigkeitsträger ausgebildet ist, wobei der Festigkeitsträger ein in Umfangsrichtung segmentiert ausgebildeter Festigkeitsträger ist.

Besonders vorteilhaft ist die Ausbildung gemäß den Merkmalen von Anspruch **14**, wobei die Wulstverstärkungslage mit wenigstens einem spiralig von radial innen nach radial außen ausgebildeten in Umfangsrichtung gewickelt angeordneten Festigkeitsträger ausgebildet ist, wobei in einem ersten radial inneren Erstreckungsbereich des Verstärkungsmaterials ein kontinuierlich und in Umfangsrichtung durchgehend ausgebildeter Festigkeitsträger gewickelt ist und bei dem in einem zweiten radial äußeren Erstreckungsbereich des Verstärkungsmaterials ein in Umfangsrichtung segmentiert ausgebildeter Festigkeitsträger gewickelt ist. Hierdurch kann die Konfektionierbarkeit verbessert und eine Vergleichmäßigung des Kordabstandes im radial äußeren Bereich des Verstärkungsmaterials zur Sicherung eines hohen Qualitätsstandards gewährleistet werden.

Besonders vorteilhaft ist die Ausbildung gemäß den Merkmalen von Anspruch 15, wobei der Festigkeitsträger der Wulstverstärkungslage ein metallischer Festigkeitsträger ist. Dies ermöglicht die Aufnahme und Vergleichmäßigung besonders hoher Zugkräfte.

Besonders vorteilhaft ist die Ausbildung gemäß den Merkmalen von Anspruch **16**, bei dem wenigstens eine Karkassenlage - insbesondere radialer Bauart - mit parallelen in Kautschuk- oder Gummimaterial eingebetteten Festigkeitsträgern um den Wulstkern umgeschlagen ausgebildet ist, wobei der Wulstverstärkungsstreifen außerdem zwischen der Karkassenlage und dem Wulstkern angeordnet ist. Der Wulstverstärkungsstreifen trennt schützend den Wulstkern von der Karkasse auch unterhalb des Wulstkerns in dem Bereich, in dem der Reifen im Betriebszustand auf der Felge aufsitzt.

Besonders vorteilhaft ist die Ausbildung gemäß den Merkmalen von Anspruch **17**, wobei die Karkasse mit ihrem Hauptteil in der Reifenseitenwand zwischen Reifenschulter und der radialen Innenseite des Wulstkerns sich radial nach innen erstreckt und dabei im radialen Erstreckungsbereichs des Wulstkerns und - insbesondere des Kernreiters - entlang der axialen Innenseite des Wulstkerns und - insbesondere des Kernreiters - verlaufend ausgebildet ist und wobei die Karkasse mit ihrem Umschlag entlang der axialen Außenseite des Wulstkerns und - insbesondere des Kernreiters - nach radial außen erstreckt ausgebildet ist.

Besonders vorteilhaft ist die Ausbildung gemäß den Merkmalen von Anspruch **18**, wobei der Umschlag der Karkasse auf der Oberfläche des Kernreiters endet mit einem Abstand von größer Null zum Hauptteil der Karkasse. Hierdurch kann die Reifenhaltbarkeit weiter verbessert werden.

Besonders vorteilhaft ist die Ausbildung gemäß den Merkmalen von Anspruch **19**, wobei die Festigkeitsträger der Karkassenlage Monofilamente oder Multifilamente aus textilen oder metallischem Material - insbesondere aus Stahl - sind. Hierdurch kann sehr individuell über das Zug-Dehnungs-Profil der Festigkeitsträger den jeweiligen reifenspezifischen Anforderungen erfüllt werden.

Die Erfindung wird im Folgenden an Hand der in den Figuren 1 bis 21 dargestellten Ausführungsbeispielen näher erläutert. **Die Figuren 13, 14, 15 und 19 zeigen erfindungsgemäße Ausbildungen. Die anderen Figuren dienen dem erleichterten Verständnis.** Darin zeigen

Fig. 1: Querschnittsdarstellung eines Nutzfahrzeugluftreifens für Steilschulterfelgen in einer Querschnittsebene, die die Reifenachse beinhaltet,

Fig. 2: vergrößerte Schnittdarstellung des radial inneren Seitenwandbereichs des Fahrzeugluftreifens von Fig. 1 im montierten, unbelasteten Betriebszustand auf einer Steilschulterfelge,

Fig. 3: alternative Ausbildung des radial inneren Seitenwandbereichs eines Fahrzeugluftreifens mit zweiteiligem Kernreiter ebenfalls in Schnittdarstellung,

Fig. 4: alternative Ausbildung des in Figur 2 dargestellten radial inneren Seitenwandbereichs eines Fahrzeugluftreifens ebenfalls in Schnittdarstellung,

Fig. 5: alternative Ausbildung des in Figur 3 dargestellten radial inneren Seitenwandbereichs eines Fahrzeugluftreifens ebenfalls in Schnittdarstellung,

Fig. 6: weitere alternative Ausbildung des in Figur 2 dargestellten radial inneren Seitenwandbereichs eines Fahrzeugluftreifens ebenfalls in Schnittdarstellung,

Fig. 7: alternative Ausbildung des in Figur 3 dargestellten radial inneren Seitenwandbereichs eines Fahrzeugluftreifens ebenfalls in Schnittdarstellung,

Fig. 8: weitere alternative Ausbildung des in Figur 2 dargestellten radial inneren Seitenwandbereichs eines Fahrzeugluftreifens ebenfalls in Schnittdarstellung,

Fig. 9: alternative Ausbildung des in Figur 3 dargestellten radial inneren Seitenwandbereichs eines Fahrzeugluftreifens ebenfalls in Schnittdarstellung,

Fig. 10: weitere alternative Ausbildung des in Figur 8 dargestellten radial inneren Seitenwandbereichs eines Fahrzeugluftreifens ebenfalls in Schnittdarstellung,

Fig. 11: alternative Ausbildung des in Figur 9 dargestellten radial inneren Seitenwandbereichs eines Fahrzeugluftreifens ebenfalls in Schnittdarstellung,

Fig. 12: alternative Ausbildung des in Figur 9 dargestellten radial inneren Seitenwandbereichs eines Fahrzeugluftreifens ebenfalls in Schnittdarstellung,

Fig. 13: weitere alternative Ausbildung des in Figur 2 dargestellten radial inneren Seitenwandbereichs eines Fahrzeugluftreifens ebenfalls in Schnittdarstellung,

Fig. 14: weitere alternative Ausbildung des in Figur 13 dargestellten radial inneren Seitenwandbereichs eines Fahrzeugluftreifens ebenfalls in Schnittdarstellung,

Fig. 15: weitere alternative Ausbildung des in Figur 14 dargestellten radial inneren Seitenwandbereichs eines Fahrzeugluftreifens ebenfalls in Schnittdarstellung,

Fig. 16: Querschnittsdarstellung eines Nutzfahrzeugluftreifens für Schrägschulterfelgen in einer Querschnittsebene, die die Reifenachse beinhaltet,

Fig. 17: vergrößerte Schnittdarstellungen des radial inneren Seitenwandbereichs des Fahrzeugluftreifens von Fig. 16 im montierten, unbelasteten Betriebszustand auf einer Schrägschulterfelge in Analogie zu dem in Fig. 2 am Fahrzeugluftreifen auf einer Steilschulterfelge dargestellten Ausführungsbeispiel,

Fig. 18: weitere alternative Ausbildung des in Figur 17 dargestellten radial inneren Seitenwandbereichs eines Fahrzeugluftreifens ebenfalls in Schnittdarstellung,

Fig. 19: weitere alternative Ausbildung des in Figur 17 dargestellten radial inneren Seitenwandbereichs eines Fahrzeugluftreifens ebenfalls in Schnittdarstellung, .

Fig. 20a: Querschnittsdarstellung eines Fahrzeugluftreifens für Personenkraftwagen mit Tiefbettfelge in einer Querschnittsebene, die die Reifenachse beinhaltet, in Analogie zu dem in Fig. 2 am Nutzfahrzeugluftreifen auf einer Steilschulterfelge dargestellten Ausführungsbeispiel,

Fig. 20b: Vorkonfektionierbares Kernbauteil für die Herstellung des Fahrzeugluftreifens von Fig. 20a,

Fig. 21a: Querschnittsdarstellung eines Fahrzeugluftreifens für Motorräder oder Motorroller mit Tiefbettfelge in einer Querschnittsebene, die die Reifenachse beinhaltet, in Analogie zu dem in Fig. 2 am Nutzfahrzeugluftreifen auf einer Steilschulterfelge dargestellten Ausführungsbeispiel,

Fig. 21b: Vorkonfektionierbares Kernbauteil für die Herstellung des Fahrzeugluftreifens von Fig. 21 a.

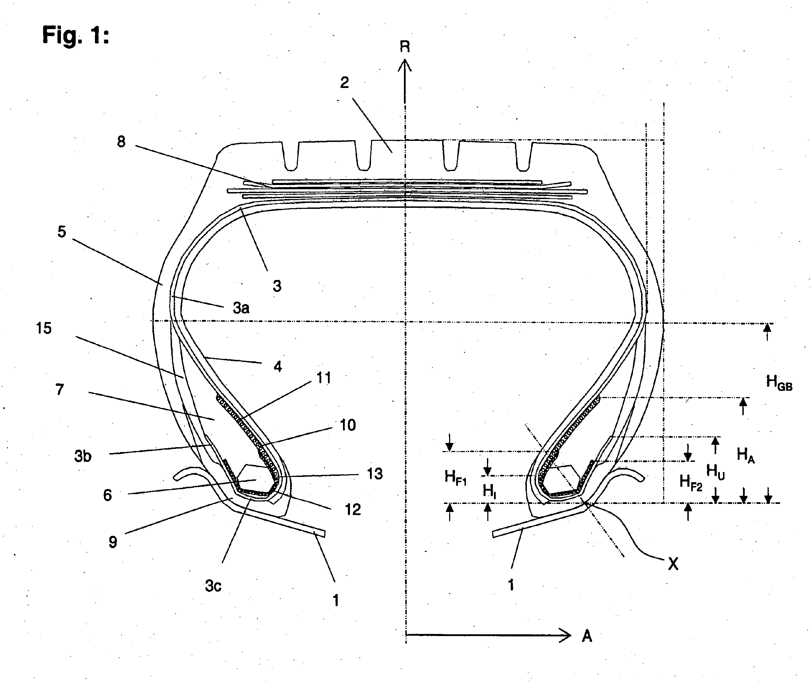

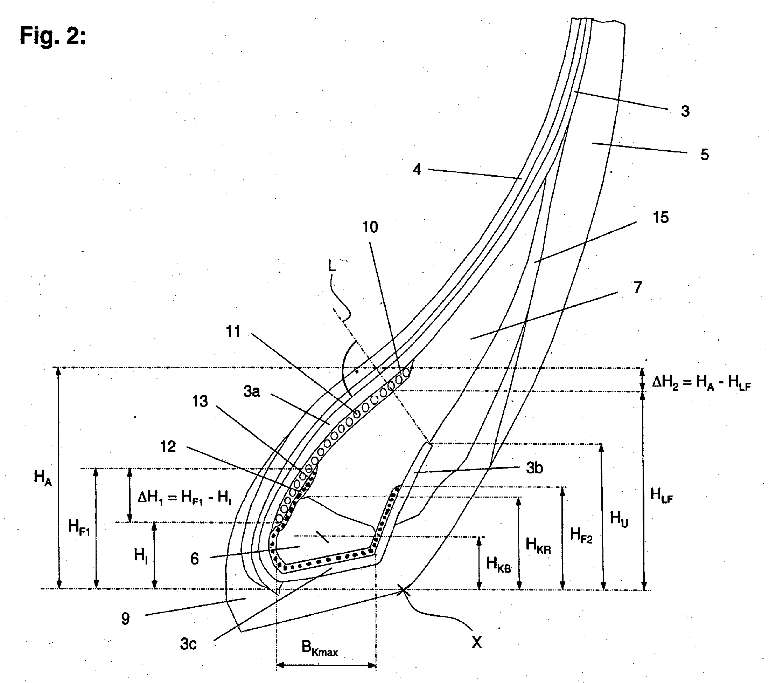

Fig. 1 und 2 zeigen einen Nutzfahrzeugluftreifen in einem auf einer korrespondierenden Felge montierten, unbelasteten Betriebszustand. Zur Vereinfachung wurde in Fig.2 auf die Darstellung der korrespondierenden Felge verzichtet.

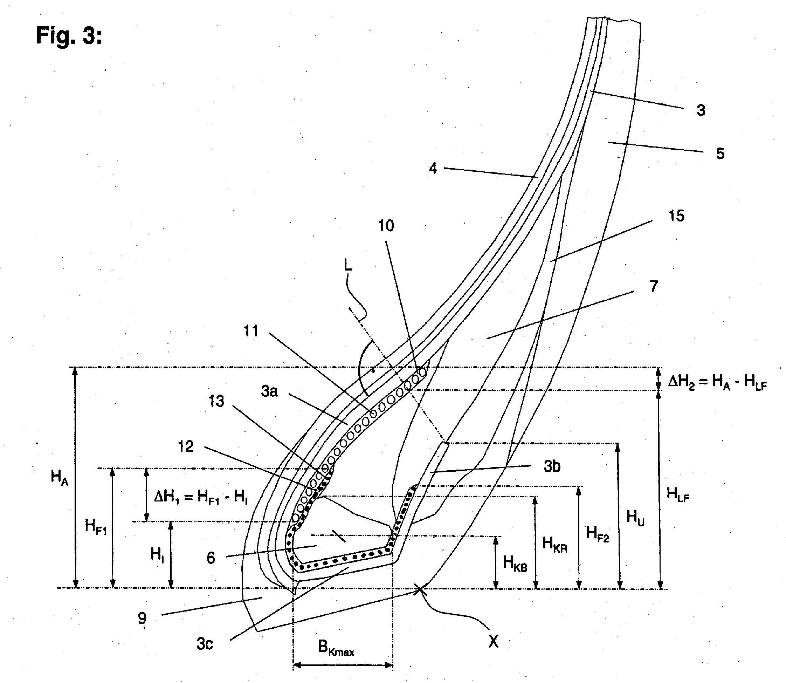

Fig. 1 zeigt schematisch den Nutzfahrzeugluftreifen im Querschnitt, wobei im Wulstbereich auch eine Steilschulterfelge, die eine Neigung der Felgenschulter zur Axialen A von 15° und ein Tiefbett aufweist, angedeutet ist. Von den Bauteilen des Nutzfahrzeugluftreifens sind ein Laufstreifen 2, eine Karkasseinlage 3, ein mehrlagiger Gürtel 8, eine insbesondere doppellagige Innenschicht 4, zwei Seitenwände 5 und an jeder Seitenwand je ein Wulstkern 6, ein Kernprofil (oder auch Kernreiter genannt) 7, ein Wulstband 9 und ein zusätzliches als Wulstaußenprofil ausgebildetes Gummiprofil 15 zwischen Seitenwand 5 und Kernprofil 7 dargestellt. Die Karkasseinlage 3 weist insbesondere Stahlkorde als Festigkeitsträger auf, die im rechten Winkel bzw. im Wesentlichen im rechten Winkel zur Umfangsrichtung des Reifens und somit in radialer Richtung R des Reifens verlaufen. Der Wulstkern 6 besteht aus Stahlkorden, das radial außerhalb des Wulstkernes 6 angeordnete und auf diesem sitzende Kernprofil 7 besteht aus einer Gummimischung mit einem hohen Elastizitätsmodul und kann auch - wie beispielsweise in Figur 3 dargestellt - mehrteilig ausgeführt sein und somit aus Gummimischungen unterschiedlicher Elastizitätsmoduli bestehen.

Wie in Figur 2 dargestellt ist, erstreckt sich die Karkasseinlage 3 mit ihrem Hauptteil 3a vom Gürtel her kommend nach radial innen durch die Seitenwand entlang der axial inneren Seite des Kernreiters 7 und des Wulstkerns 6, ist unter Bildung eines Zwischenabschnitts 3c auf der radial inneren Seite des Wulstkernes 6 um den Wulstkern 6 nach axial außen herumgeführt und um den Wulstkern 6 nach radial außen herumgeschlagen und erstreckt sich mit ihrem Umschlag 3b auf der axialen Außenseite des Wulstkernes 6 und des Kernreiters 7 in direktem Berührkontakt zum Kernreiter 7 bis in einen radialen Abstand $H_U$ vom Felgeneckpunkt X.

Auf der axialen Innenseite des Kernreiters 7 ist zwischen Kernreiter 7 und dem Hauptteil 3a der Karkasse 3 eine Wulstverstärkungslage 10 ausgebildet. Die Wulstverstärkungslage 10 erstreckt sich dabei von einer radial inneren Position im radialen Abstand $H_I$ zum Felgeneckpunkt X bis zu einer radial äußeren Position im radialen Abstand $H_A$ vom Felgeneckpunkt X. Die Wulstverstärkungslage 10 ist aus einem in Umfangsrichtung über den gesamten Reifen erstreckten, in einer Gummimischung eingebetteten, von radial innen beginnend bei der radialen Höhe $H_I$ nach radial außen bis zur radialen Höhe $H_A$ erstreckt spiralig aufgewickelten, kontinuierlichen Festigkeitsträger 11 ausgebildet. Die Wulstverstärkungslage 10 ist dabei längs ihrer radialen Erstreckung in direktem Berührkontakt zum Hauptteil 3a der Karkasseinlage 3.

Für das Maß $H_I$ gilt: $H_{KB} \leq H_I \leq H_{KR}$, wobei $H_{KB}$ den radialen Abstand vom Felgeneckpunkt X angibt, in dem der Wulstkern 6 seine maximale Breite $B_{KMax}$ in axialer Richtung des Fahrzeugluftreifens gemessen aufweist, und $H_{KR}$ den radialen Abstand vorn Felgeneckpunkt X angibt, der dem maximalen radialen Abstand der radial äußeren Mantelfläche des Wulstkernes 6 zum Felgeneckpunkt X entspricht.

In einem für Nutzfahrzeugluftreifen mit Steilschulter typischen Ausführungsbeispiel ist beispielsweise $H_U = 35$mm gewählt und $9{,}0$ mm $\leq H_{KR} \leq 28{,}0$ mm.

In Fig. 1 ist auch der radiale Abstand $H_{GB}$ zum Felgeneckpunkt X vom Fel-geneckpunkt eingetragen, der die breiteste Stelle des montierten Nutzfahrzeugluftreifens im Betriebszustand angibt.

In Fig. 2 ist die in den dargestellten Schnittebenen im radialen Abstand $H_U$ vom Felgeneckpunkt X des Lagenendes des Karkassumschlags 3b der Karkasseinlage 3 berührende Senkrechte L zum Hauptteil der Karkasse 3a eingezeichnet. Der Schnittpunkt (Lotfußpunkt) dieser Senkrechten L zum Hauptteil der Karkasse 3a weist einen radialen Abstand $H_{LF}$ zum Felgeneckpunkt X auf. Die Wulstverstärkungslage 10 erstreckt sich nach radial außen bis in den radialen Abstand $H_A$ vom Felgeneckpunkt X, wobei für $H_A$ gilt: $(0,65\ H_{LF}) \leq H_A \leq (1,5\ H_{LF})$.

Das Wulstaußenprofil 15 erstreckt sich von einer radialen Position mit radialem Abstand vom Felgeneckpunkt X der kleiner ist als der Abstand $H_U$ bis zu einer radialen Position mit radialem Abstand vom Felgeneckpunkt X der größer ist als der Abstand $H_A$.

Wie in den Figuren 1 und 2 dargestellt ist, ist radial innerhalb des Wulstkerns 6 wenigstens ein weiterer über den gesamten Umfang des Fahrzeugreifens erstreckter Wulstverstärkungsstreifen 12 ausgebildet, der sich in axialer Richtung über die gesamte axiale Erstreckung des Wulstkerns 6 erstreckt und der zu beiden axialen Außenseiten des Wulstkerns 6 jeweils nach radial außen umgeschlagen ist, wobei der erste Umschlag sich bis in eine radiale Erstreckungshöhe $H_{F1}$ vom Felgeneckpunkt X und der zweite Umschlag bis in eine radiale Erstreckungshöhe $H_{F2}$ vom Fel-geneckpunkt X erstreckt. Der Wulstverstärkungsstreifen 12 ist dabei mit seinem ersten Umschlag im radial inneren Bereich der Wulstverstärkungslage 10 ausgehend von der radialen Erstreckungshöhe $H_{F1}$ vom Felgeneckpunkt X zwischen Wulstverstärkungslage 10 und Kernreiter 7 in direktem Berührkontakt zum Kernreiter 7 und zur Wulstverstärkungslage 10 erstreckt, auf der radial inneren Seite des Wulstkern 6 in direktem Berührkontakt zum Wulstkern 6 eng um den Wulstkern 6 gelegt und auf der axialen Außenseite des Wulstkerns nach radial außen bis in die radiale Erstreckungshöhe $H_{F2}$ vom Felgeneckpunkt X zwischen dem Karkassenumschlag 3b und dem Kernreiter 7 in direktem Berührkontakt zu dem Karkassenumschlag 3b und dem Kernreiter 7 erstreckt ausgebildet. Der Wulstverstärkungsstreifen 12 ist aus textilen Festigkeitsträgern 13 bekannter Art, beispielsweise aus einer oder mehreren Lagen von in Kautschuk oder in Gummi eingebetteten parallel zueinander angeordneten textilen Korden aus Monofilamenten oder Multifilamente ausgebildet. Beispielsweise sind die textilen Festigkeitsträger aus einem multifilamentigen Kord der Konstruktion 940x2 aus Polyamid, Polyester oder aus Polyolefin bekannter Art ausgebildet. Die Festigkeitsträger 13 sind dabei unter einem Steigungswinkel von 35 ° bis 55 ° zur Umfangsrichtung des Reifens verlaufend ausgebildet.

In einer alternativen Ausführung ist der Wulstverstärkungsstreifen 12 aus einem mit Kautschuk oder Gummi beschichteten Gewebe aus textilen Korden 13 ausgebildet, beispielsweise aus einem Kreuzgewebe mit Leinwand-, Köper- oder Atlasbindung bekannter Art.

Für die radiale Erstreckungshöhe $H_{F1}$ vom Felgeneckpunkt X des ersten Umschlags und für die radiale Erstreckungshöhe $H_{F2}$ vom Felgeneckpunkt X des zweiten Umschlags gilt: $H_{F1} > H_I$, $H_{F1} < H_A$ und $H_{F2} < H_U$. Beispielsweise ist $H_{F2}$ so ausgebildet, dass $(10,0\ mm) \leq H_{F2} \leq (30,0\ mm)$.

In einem Ausführungsbeispiel ist die Differenz $\Delta H_1$ zwischen $H_{F1}$ und $H_I$, die das Maß der Überlappung der Wulstverstärkungslage 10 und des Wulstverstärkungsstreifens 12 darstellt, so gewählt, dass für $\Delta H_1 = (H_{F1} - H_I)$ gilt: $(5mm) \leq \Delta H_1 \leq (45mm)$. In den dargestellten Ausführungsbeispielen ist beispielsweise $\Delta H_1 = 15mm$ gewählt.

Im dargestellten Ausführungsbeispiel ist die radiale Erstreckungshöhe $H_{F1}$ des zusätzlichen Verstärkungsstreifen 12 auf der axialen Innenseite des Wulstkernes 6 im Fahrzeugluftreifen größer gewählt wie die radiale Erstreckungshöhe $H_{F2}$ zum Felgeneckpunkt X auf der axialen Außenseite des Wulstkernes 6: Dabei gilt $H_{KR} < H_{F2} < Hu$ und $H_{F2} > H_I$. Beispielsweise ist $H_{F1} \geq H_{F2}$ gewählt.

Fig. 3 zeigt eine alternative Ausbildung eines derartig ausgebildeten Nutzfahrzeugluftreifens zum Einsatz auf einer Steilschulterfelge im montierten und unbelasteten Zustand auf einer korrespondierend ausgebildeten Steilschulterfelge bekannter Art. Die Ausbildung entspricht der in Fig. 2 dargestellten Ausführung, wobei anders als in Fig. 2 der Kernreiter 7 mehrteilig aus mindestens zwei Gummimischungen unterschiedlicher Elastizitätsmoduli ausgebildet ist. Im dargestellten Ausführungsbeispiel ist der Kernreiter zweiteilig aus zwei Gummimischungen unterschiedlicher Elastizitätsmoduli ausgebildet.

Der Festigkeitsträger 11 ist in den dargestellten Ausführungsbeispielen ein gummierte mono- oder mehrfilamentiger Stahlkord, der verseilt oder geflochten ist. Der Kord 11 der Wulstverstärkungslage 10 ist in einer Ausführung ein Kord der Konstruktion (2 +6) oder (3 + 7) oder (3+9), der in einer Ausführung gewendelt oder mit einer Wendel umschlagen ist.

In den dargestellten Ausführungsbeispielen liegt die radiale Erstreckung $H_A$ radial innerhalb der radial äußeren maximalen Erstreckung des Kernreiters 7.

In einem Ausführungsbeispiel ist $H_I$ beispielsweise 10 bis 25 mm groß gewählt. In den dargestellten Ausführungsbeispielen ist $H_I$ beispielsweise 15 mm groß gewählt.

In einem Ausführungsbeispiel ist die Differenz $\Delta H_2$ zwischen $H_A$ und $H_{LF}$, so gewählt, dass für $\Delta H_2 = (H_A - H_{LF})$ gilt: $(-15\ mm) \leq \Delta H_2 \leq (+ 23\ mm)$. In den dargestellten Ausführungsbeispielen ist beispielsweise $\Delta H_2 = 7\ mm$ gewählt.

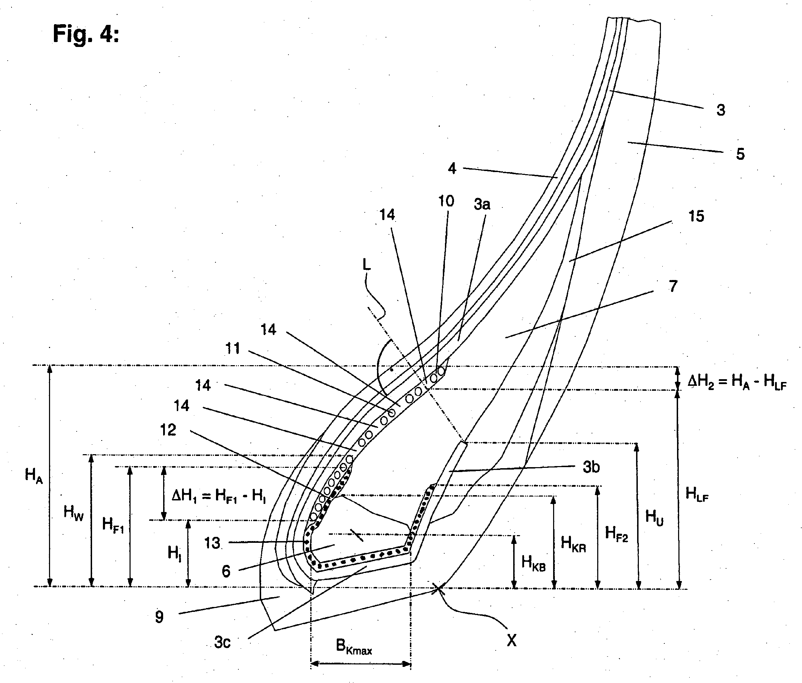

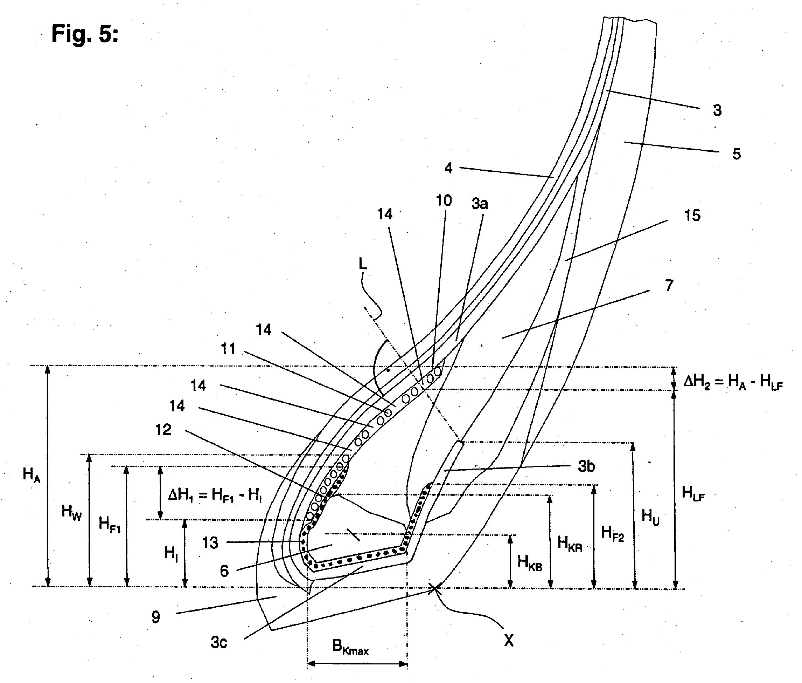

Fig. 4 zeigt eine alternative Ausführung zu der in Fig. 2 dargestellten Ausführung und Fig. 5 zeigt eine alternative Ausführung zu der in Fig. 3 dargestellten Ausführung, wobei die den Ausführungen der Fig. 4 und Fig. 5 gegenüber den Ausführungen der Fig. 2 und Fig. 3 lediglich hinsichtlich der Wulstverstärkungslage 10 geändert ist. Die Wulstverstärkungslage 10 ist bei diesen Ausführungsbeispielen aus einem radial inneren Erstreckungsbereich, ausgehend von der radial inneren Erstreckungsposition der Wulstverstärkungslage 10 im radialen Abstand $H_I$ vom Felgeneckpunkt X bis zu einem radialen Abstand $H_W$ vom Felgeneckpunkt X mit darin kontinuierlich von radial innen nach radial außen spiralig gewickeltem Festigkeitsträger 11 ausgebildet. In einem radial äußeren Erstreckungsbereich, der sich radial zwischen der Position im radialen Abstand Hw zum Felgeneckpunkt X und der radial äußeren Erstreckungsposition der Wulstverstärkungslage 10 im radialen Abstand $H_A$ vom Felgeneckpunkt X erstreckt, ist der Festigkeitsträger 11 in Umfangsrichtung des Reifens in regelmäßigen Abständen segmentiert ausgebildet. Dabei ergibt sich in Umfangsrichtung des Reifens jeweils zwischen dem Ende des einen Umfangssegmentes und dem Anfang des nächsten Umfangssegmentes ein Umfangsspalt 14. Die Segmentierung ist dabei so gewählt, dass der Umfangsspalt 14 durch ein Festigkeitsträgersegment der nächsten Windung überbrückt wird.

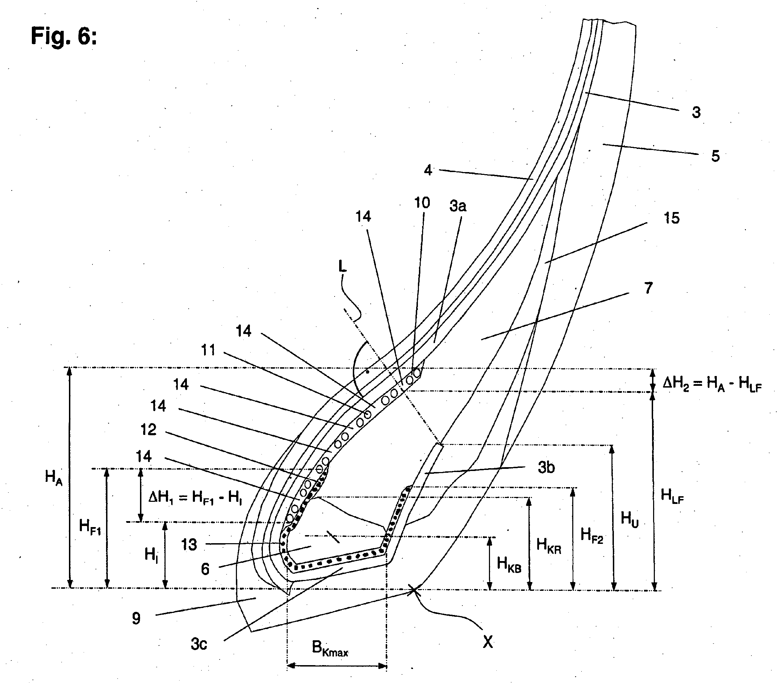

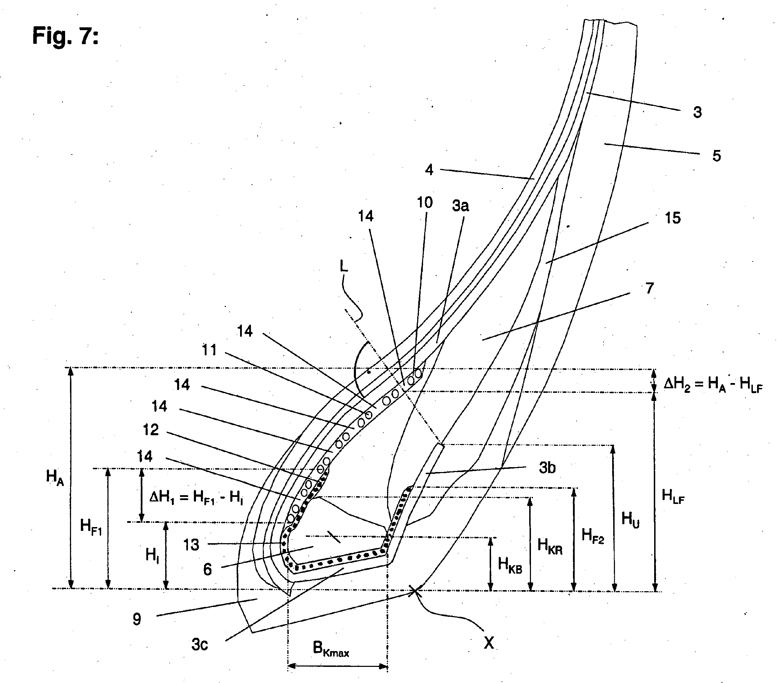

In Fig. 6 und Fig. 7 ist jeweils eine zu der in Fig.4 bzw. Fig. 5 dargestellten Ausführung, alternativ ausgebildete Ausführung dargestellt, bei der jedoch der Festigkeitsträger 11 der Wulstverstärkungslage 10 jeweils im gesamten radialen Erstreckungsbereich der Wulstverstärkungslage 10 segmentiert ausgebildet ist.

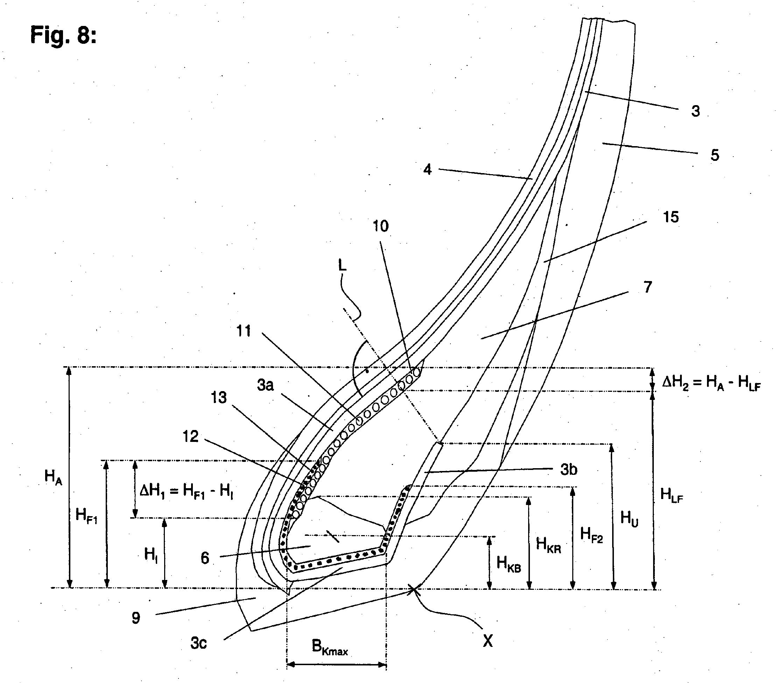

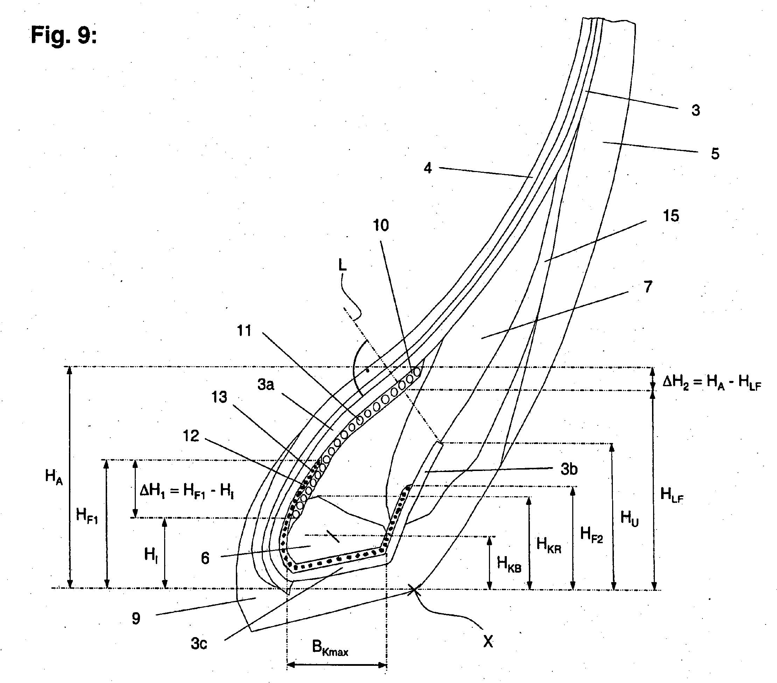

Fig. 8 zeigt eine weitere alternative Ausführung zu der am Beispiel von dem in Fig. 2 dargestellten Ausführung und Fig. 9 zeigt eine alternative Ausführung zu der am Beispiel von dem in Fig. 3 dargestellten Ausführung, wobei der Wulstverstärkungsstreifen 12 dabei mit seinem ersten Umschlag im radial inneren Bereich der Wulstverstärkungslage 10 ausgehend von der radialen Erstreckungshöhe $H_{F1}$ vom Felgeneckpunkt X zwischen Wulstverstärkungslage 10 und dem Hauptteil 3a der Karkasse 3 in direktem Berührkontakt zum Hauptteil 3a der Karkasse 3 und zur Wulstverstärkungslage 10 und radial innerhalb der radialen Erstreckungshöhe $H_I$ vom Felgeneckpunkt X in direktem Berührkontakt zum Hauptteil 3a der Karkasse 7 und zum Wulstkern 6 erstreckt, auf der radial inneren Seite des Wulstkern 6 in direktem Berührkontakt zum Wulstkern 6 eng um den Wulstkern 6 gelegt und auf der axialen Außenseite des Wulstkerns nach radial außen bis in die radiale Erstreckungshöhe $H_{F2}$ vom Felgeneckpunkt X zwischen dem Karkassenumschlag 3b und dem Kernreiter 7 in direktem Berührkontakt zu dem Karkassenumschlag 3b und dem Kernreiter 7 erstreckt ausgebildet ist.

Diese Ausbildung ist in weiterer Ausführung auch in Verbindung mit den anderen dargestellten oder beschriebenen Ausführungen beispielsweise in Verbindung mit der in den Fig. 4 oder Fig. 5 dargestellten Ausführungen möglich..

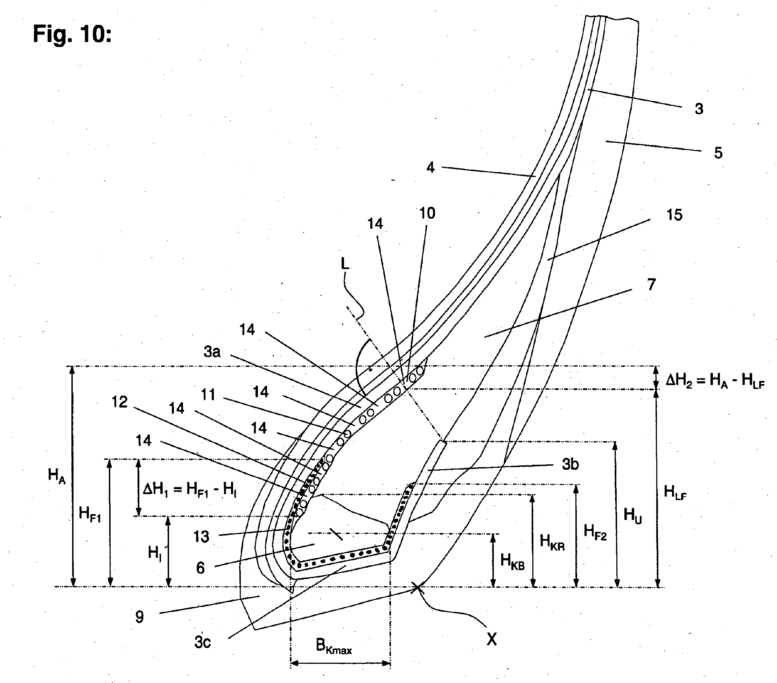

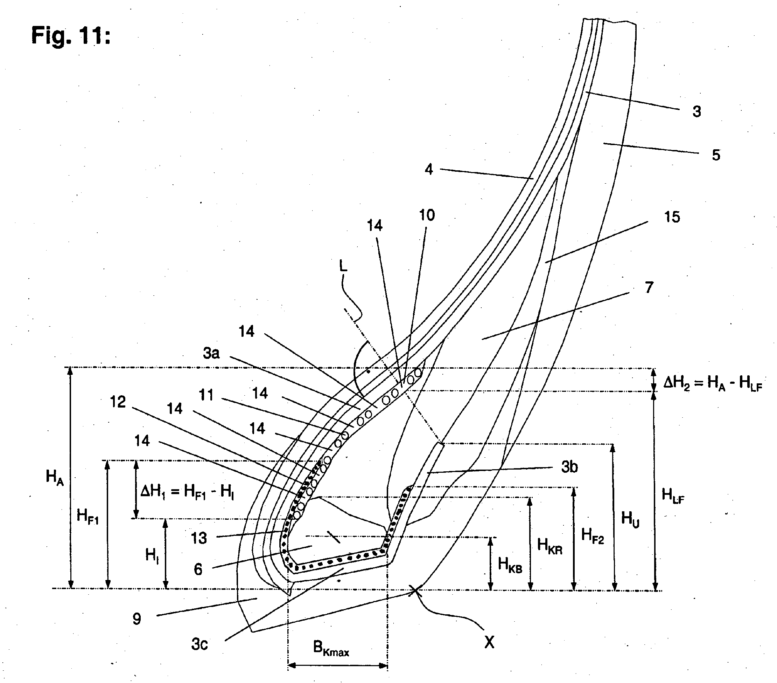

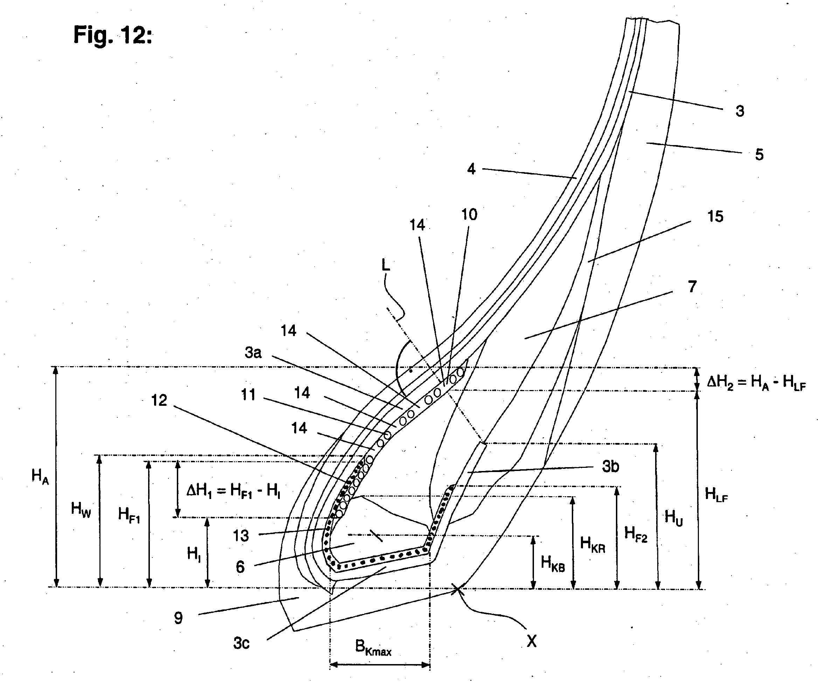

In Fig. 10 und Fig. 11 ist jeweils eine zu der in Fig. 8 bzw. Fig. 9 dargestellten Ausführung alternativ ausgebildete Ausführung dargestellt, bei der jedoch der Festigkeitsträger 11 der Wulstverstärkungslage 10 jeweils im gesamten radialen Erstreckungsbereich der Wulstverstärkungslage 10 segmentiert ausgebildet ist. Fig. 12 zeigt eine derartige Ausführung, die analog der in Fig. 5 dargestellten Ausführung mit Wulstverstärkungslage 10 ausgebildet ist, deren Festigkeitsträger 11 nur im radial inneren Erstreckungsbereich kontinuierlich und im radial äußeren Erstreckungsbereich segmentiert ausgebildet ist.

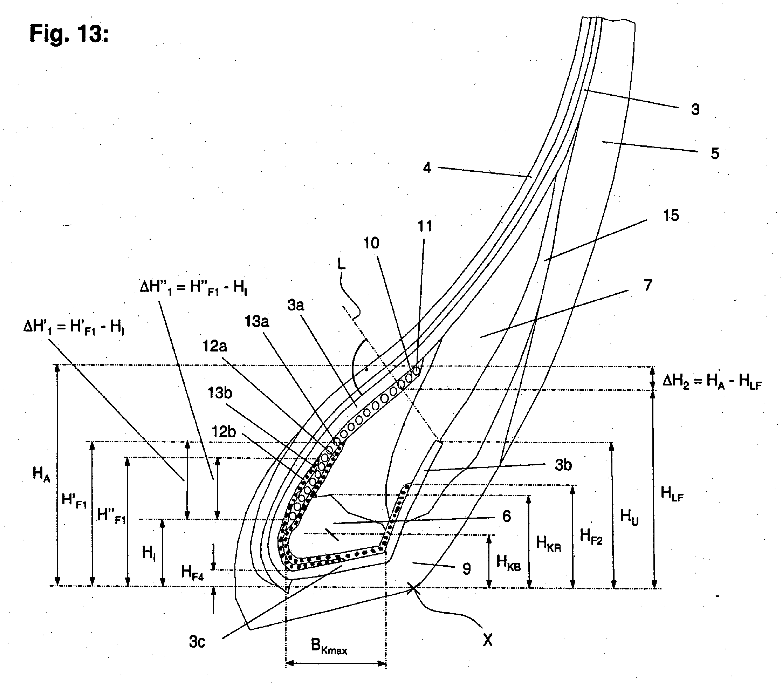

Fig. 13 zeigt eine weitere alternative Ausführung, die besonders für Hochlastreifen geeignet ist, zu der am Beispiel von dem in Fig. 2 dargestellten Ausführung, wobei der Wulstverstärkungsstreifen 12 aus einer inneren Lage 12a und einer äußeren Lage 12b besteht. Der erste Umschlag der inneren Lage 12 a erstreckt sich bis in eine radiale Erstreckungshöhe $H'_{F1}$ vom Felgeneckpunkt X und der zweite Umschlag bis in eine radiale Erstreckungshöhe $H_{F2}$ vom Felgeneckpunkt X erstreckt. Die innere Lage 12a des Wulstverstärkungsstreifens 12 ist dabei mit ihrem ersten Umschlag im radial inneren Bereich der Wulstverstärkungslage 10 ausgehend von der radialen Erstreckungshöhe $H'_{F1}$ vom Felgeneckpunkt X zwischen Wulstverstärkungslage 10 und Kernreiter 7 in direktem Berührkontakt zum Kernreiter 7 und zur Wulstverstärkungslage 10 erstreckt, auf der radial inneren Seite des Wulstkerns 6 in direktem Berührkontakt zum Wulstkern 6 eng um den Wulstkern 6 gelegt und auf der axialen Außenseite des Wulstkerns nach radial außen bis in die radiale Erstreckungshöhe $H_{F2}$ vom Felgeneckpunkt X zwischen dem Karkassenumschlag 3b und dem Kernreiter 7 in direktem Berührkontakt zu dem Karkassenumschlag 3b und dem Kernreiter 7 erstreckt ausgebildet. Die äußere Lage 12b des Wulstverstärkungsstreifens 12 ist mit ihrem ersten Umschlag im radial inneren Bereich der Wulstverstärkungslage 10 ausgehend von der radialen Erstreckungshöhe $H''_{F1}$ vom Felgeneckpunkt X zwischen Wulstverstärkungslage 10 und dem Hauptteil 3a der Karkasse 3 in direktem Berührkontakt zum Hauptteil 3a der Karkasse 3 und zur Wulstverstärkungslage 10 und radial innerhalb der radialen Erstreckungshöhe $H_I$ vom Felgeneckpunkt X in direktem Berührkontakt zum Hauptteil 3a der Karkasse 3 und zur inneren Lage 12a des Wulstverstärkungsstreifens 12 erstreckt. In einer- in Fig. 13 dargestellten Ausführung - endet die äußere Lage 12b auf der radial inneren Seite des Wulstkerns 6 auf der radial inneren Lage 12a. In einer weiteren nicht dargestellten Ausführung erstreckt sich die radial äußere Lage 12b in direktem Berührkontakt zur radial inneren Lage 12a eng um den Wulstkern 6 gelegt und auf der axialen Außenseite des Wulstkerns nach radial außen bis beispielsweise in die radiale Erstreckungshöhe $H_{F2}$ vom Felgeneckpunkt X zwischen dem Karkassenumschlag 3b und der radiale inneren Lage 12a in direktem Berührkontakt zu dem Karkassenumschlag 3b und der radial inneren Lage 12a.

Die radiale Erstreckungshöhe $H'_{F1}$ vom Felgeneckpunkt X des ersten Umschlags der inneren Lage 12a, sowie die radiale Erstreckungshöhe $H''_{F1}$ vom Felgsneckpunkt X des ersten Umschlags der äußeren Lage 12b sind dabei so gewählt, dass gilt:

$$0\,\text{mm} \leq (H'_{F1} - H''_{F1}) \leq 11\ \text{mm}.$$

Die Festigkeitsträger 13a der inneren Lage 12a als auch die Festigkeitsträger 13b der äußeren Lage 12b sind unter einem Steigungswinkel von 35° bis 55° zur Umfangsrichtung des Reifens verlaufend ausgebildet. In einem Ausführungsbeispiel sind die Festigkeitsträger 13a der inneren Lage 12a dabei mit einem in Umfangsrichtung U des Fahrzeugreifens entgegengesetzt gerichteten Steigungsverlauf zur Umfangsrichtung U ausgebildet als die Festigkeitsträger 13b der äußeren Lage 12b. In einer anderen Ausführung sind die Festigkeitsträger 13a der inneren Lage 12a dabei mit einem in Umfangsrichtung U des Fahrzeugreifens gleichgerichteten Steigungsverlauf zur Umfangsrichtung U ausgebildet wie die Festigkeitsträger 13b der äußeren Lage 12b.

Darüber hinaus gelten auch hier die oben genannten Angaben für die Bemaßung und das Material.

Auch wenn nicht durch weitere Figuren dargestellt, sind diese Ausbildungen jeweils auch in weiteren Ausführungsbeispielen in Verbindung mit den bereits weiter oben dargestellten oder beschriebenen Ausführungen beispielsweise in Verbindung mit einem zweiteiligen Kernreiter und/oder in Verbindung mit einer Wulstverstärkungslage 10 mit zum Teil segmentiertem Festigkeitsträger 11, wie im Zusammenhang mit den Ausführungen zu den Fig.3 bis Fig. 12 dargestellt bzw. beschrieben ausgebildet.

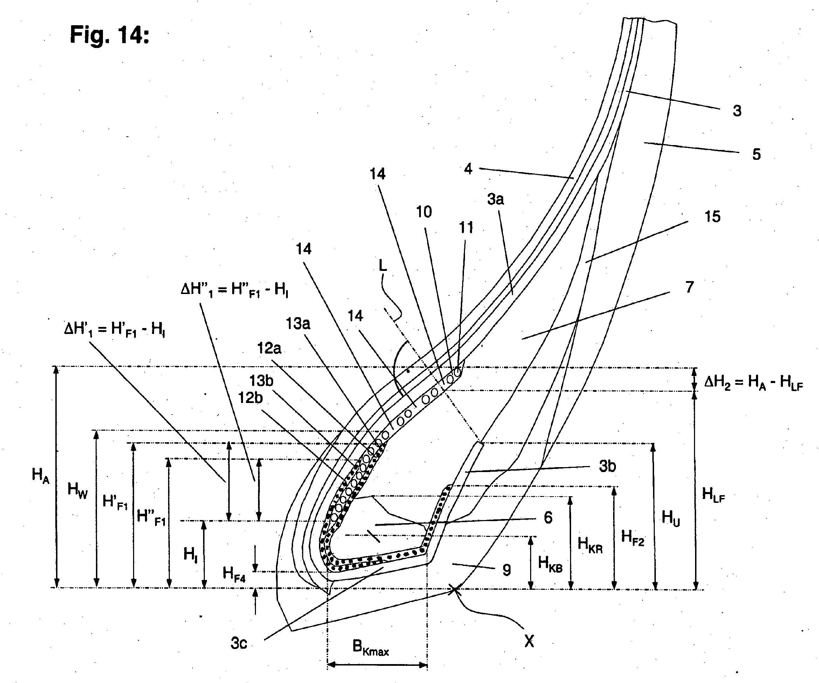

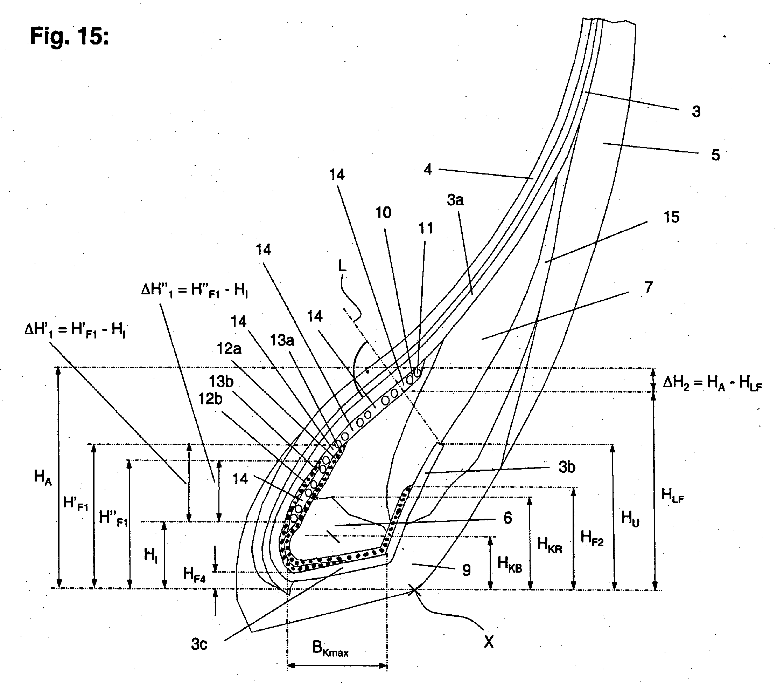

In Fig. 15 ist beispielsweise eine Ausführung dargestellt, bei der der Festigkeitsträger 11 der Wulstverstärkungslage 10 jeweils im gesamten radialen Erstreckungsbereich der Wulstverstärkungslage 10 segmentiert ausgebildet ist. Fig. 14 zeigt eine derartige Ausführung, bei der der Festigkeitsträger 11 der Wulstverstärkungslage 10 nur im radial inneren Erstreckungsbereich kontinuierlich und im radial äußeren Erstreckungsbereich segmentiert ausgebildet ist.

Auch wenn die oben dargestellten Ausführungsbeispiele jeweils an hand von Nutzfahrzeugluftreifen mit Steilschulterfelge in den Figuren 1 bis 15 dargestellt wurden, sind all diese Ausführungen in weiteren analogen Ausführungen auch bei Nutzfahrzeugluftreifen mit Schrägschulterfelgen ausgebildet.

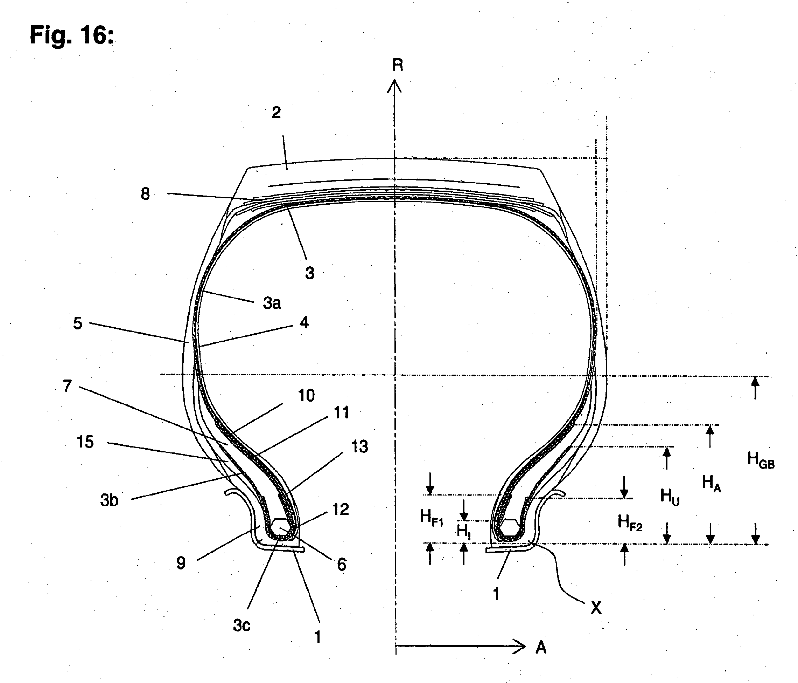

Fig. 16 bis 19 zeigen jeweils einen derartigen Nutzfahrzeugluftreifen für eine Schrägschulterfelge in einem auf einer korrespondierenden Felge montierten, unbelasteten Betriebszustand.

Fig. 16 zeigt schematisch den Nutzfahrzeugluftreifen im Querschnitt, wobei im Wulstbereich auch eine Schrägschulterfelge, die eine Neigung der Felgenschulter zur Axialen A von 5° und ein Flachbett aufweist, angedeutet ist. Die Bezeichnungen der Bauteile sowie die Bezeichnungen der Bemaßungen sind hierbei identisch zu denen in Fig. 1. Der grundsätzliche Aufbau des Nutzfahrzeugreifens entspricht dem bereits im Zusammenhang mit den Fig. 1 bis 15 erläuterten Aufbau und den in deren Zusammenhang dargelegten unterschiedlichen Ausführungsbeispielen.

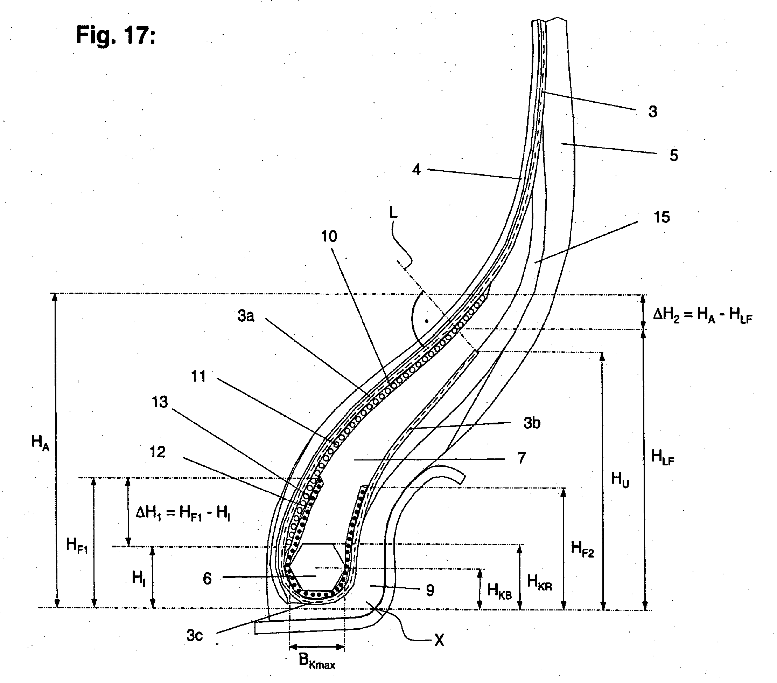

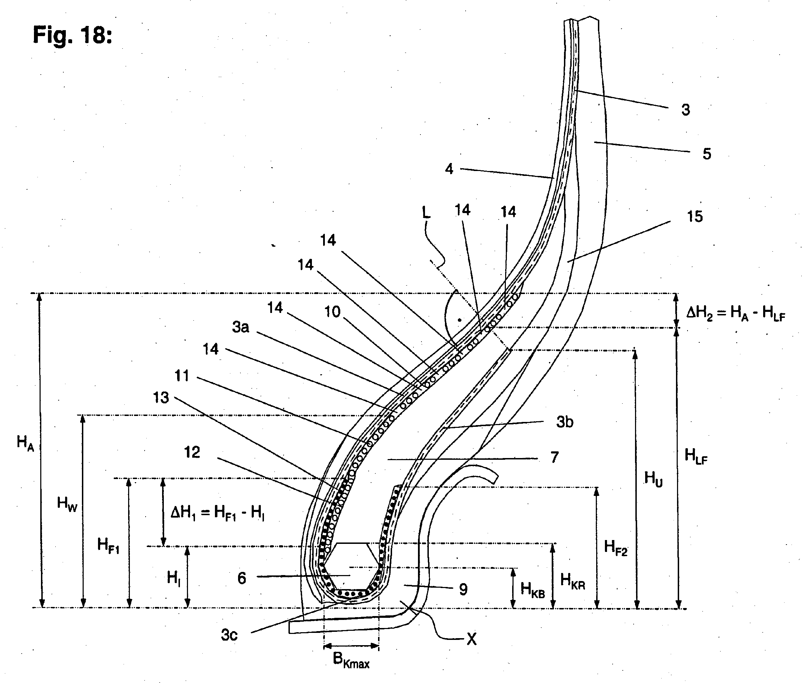

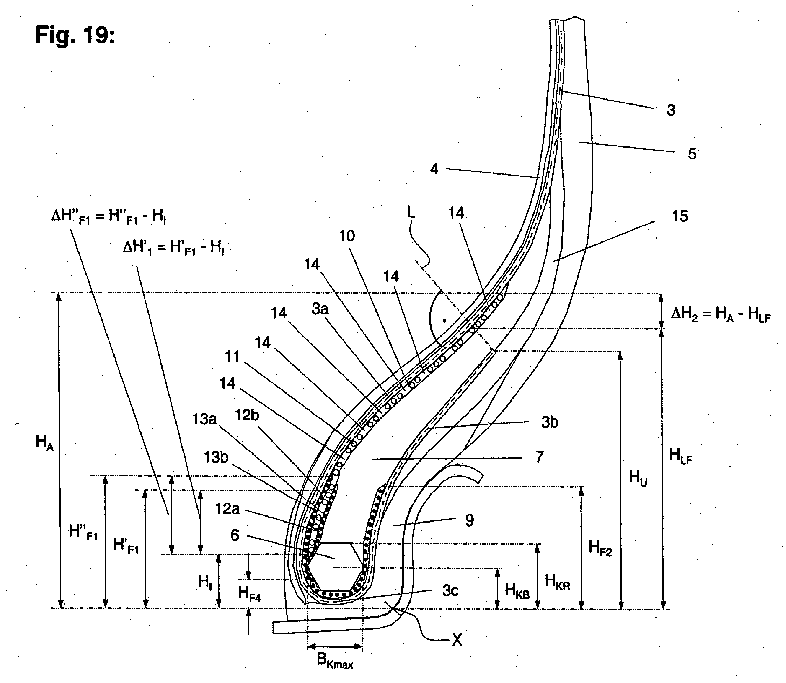

Anstelle der in den Fig. 16 bis 19 dargestellten einteiligen Kernreiter wird in anderen - nicht dargestellten Ausführungen - ein mehrteiliger z.B. zweiteiliger Kernreiter eingesetzt. Anstelle der in Fig. 17 dargestellten Ausbildung mit Wulstverstärkungslage 10 mit kontinuierlich gewickeltem Festigkeitsträger 11 wird in der in Fig. 18 dargestellten Ausführung analog zu den Erläuterungen zu Fig. 4 eine Wulstverstärkungslage 10 mit im radial inneren Erstreckungsbereich kontinuierlich und im radial äußeren Erstreckungsbereich segmentiert gewickeltem Festigkeitsträger 11 mit Umfangslücken 14 und in der in Fig. 19 dargestellten Ausführung analog zu den Erläuterungen zu Fig. 6 eine Wulstverstärkungslage 10 mit über ihren gesamten radialen Erstreckungsbereich segmentiert gewickeltem Festigkeitsträger 11 mit Umfangslücken 14 eingesetzt.

In einem für Nutzfahrzeugluftreifen mit Schrägschulter typischen Ausführungsbeispiel ist der radialen Abstand $H_U$ vom Felgeneckpunkt X, bis zu dem sich der Umschlag 3b der Karkasse erstreckt, größer gewählt als bei einem Nutzfahrzeugluftreifen mit Steilschulter. In einem für Nutzfahrzeugluftreifen mit Schrägschulter typischen Ausführungsbeispiel ist $H_U$ beispielsweise so gewählt, dass: $45\,\text{mm} \leq H_U \leq 75\,\text{mm}$.

Wie in Fig. 17 beispielhaft am analog zu Fig.2 dargestellten Ausführungsbeispiel zu erkennen ist, erstreckt sich auch hier die Wulstverstärkungslage 10 nach radial außen bis in den radialen Abstand $H_A$ vom Felgeneckpunkt X, wobei für $H_A$ bei einem Nutzfahrzeugluftreifen mit Schrägschulter gilt:

$$(0,65\ H_{LF}) \leq H_A \leq (1,3\ H_{LF}).$$

In einem Ausführungsbeispiel eines Nutzfahrzeugluftreifens mit Schrägschulter ist die Differenz $\Delta H_1$ zwischen $H_{F1}$ und $H_I$, die das Maß der Überlappung der Wulstverstärkungslage 10 und des Wulstverstärkungsstreifens 12 darstellt, so gewählt, dass für $\Delta H_1 = (H_{F1} - H_I)$ gilt: $(5\ \text{mm}) \leq \Delta H_1 \leq (32\ \text{mm})$. In den dargestellten Ausführungsbeispielen ist beispielsweise $\Delta H_1 = 20$ mm gewählt.

In einem Ausführungsbeispiel eines Nutzfahrzeugluftreifens mit Schrägschulter ist die Differenz $\Delta H_2$ zwischen $H_A$ und $H_{LF}$, so gewählt, dass für $\Delta H_2 = (H_A - H_{LF})$ gilt: $(-22\,\text{mm}) \leq \Delta H_2 \leq (+22\,\text{mm})$. In den dargestellten Ausführungsbeispielen ist beispielsweise $\Delta H_2 = 12$ mm gewählt.

**EP 1 996 412 B1**

In einem Ausführungsbeispiel eines Nutzfahrzeugluftreifens mit Schrägschulter gilt ebenfalls für die radiale Erstreckungshöhe $H_{FI}$ vom Felgeneckpunkt X des ersten Umschlags und für die radiale Erstreckungshöhe $H_{F2}$ vom Felgeneckpunkt X des zweiten Umschlags: $H_{F1} > H_I$, $H_{F1} < H_A$ und $H_{F2} < H_U$. Beispielsweise ist $H_{F2}$ so ausgebildet, dass $(10mm) \leq H_{F2} \leq (30mm)$. $H_{F1}$ kann beispielsweise bis zu 55mm groß sein.

Der Wulstkern 6 der oben genannten Ausführungsbeispiele ist beispielsweise - wie in den dargestellten Ausführungsbeispielen gemäß Fig.2 bis Fig. 15 gezeigt - ein Wulstkern 6 mit im Wesentlichen pentagonalem Querschnitt. In einer anderen Ausführung ist der Wulstkern 6 - wie in den dargestellten Ausführungsbeispielen gemäß Fig. 1, Fig. 16 bis Fig. 19 - ein Wulstkern mit im Wesentlichen hexagonalem Querschnitt mit beispielsweise - wie in Fig. 1 dargestellt - zum Teil abgeflachten Ecken. In weiterer, nicht dargestellter, alternativer Ausführung ist der Wulstkern 6 in alternativen Querschnittsformen bekannter Art beispielsweise in runder, ovaler, elliptischer oder sonstiger für die Ausbildung eines Wulstkerns geeigneter polygonaler Querschnittsform ausgebildet.

Auch wenn die Ausbildung mit Wulstverstärkungslage 10 und Wulstverstärkungsstreifen 12 bislang nur im Zusammenhang mit Nutzfahrzeugluftreifen dargestellt und beschrieben wurde, beinhalten weiteren Ausführungsbeispiele eine derartige analoge Ausbildung auch bei anderen Fahrzeugluftreifen, wie z.B. Fahrzeugluftreifen für Personenkraftwagen, Motorräder, Motorroller, Erdmaschinen, Traktoren oder Flugzeugreifen.

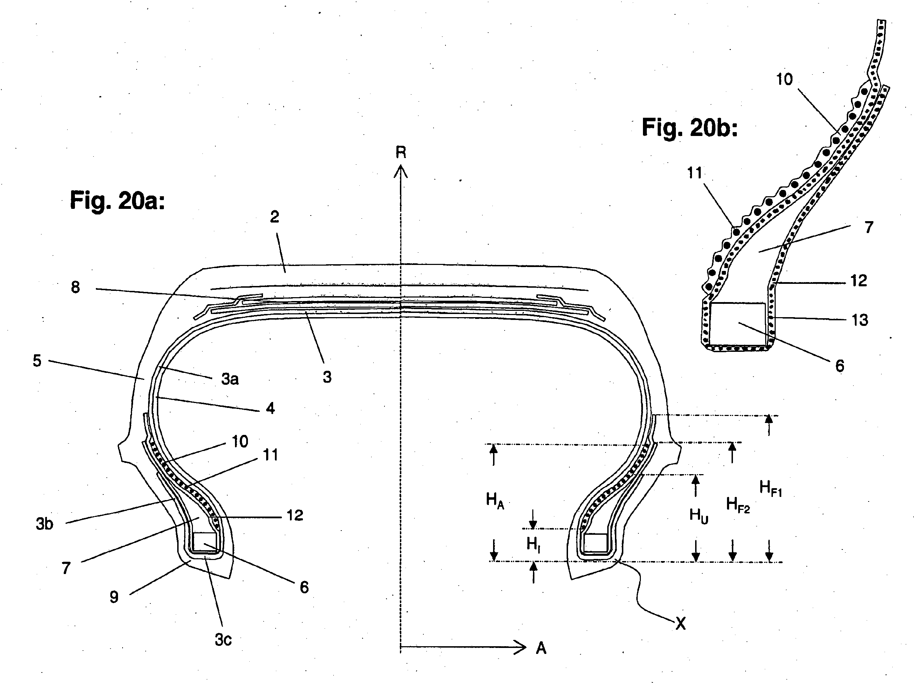

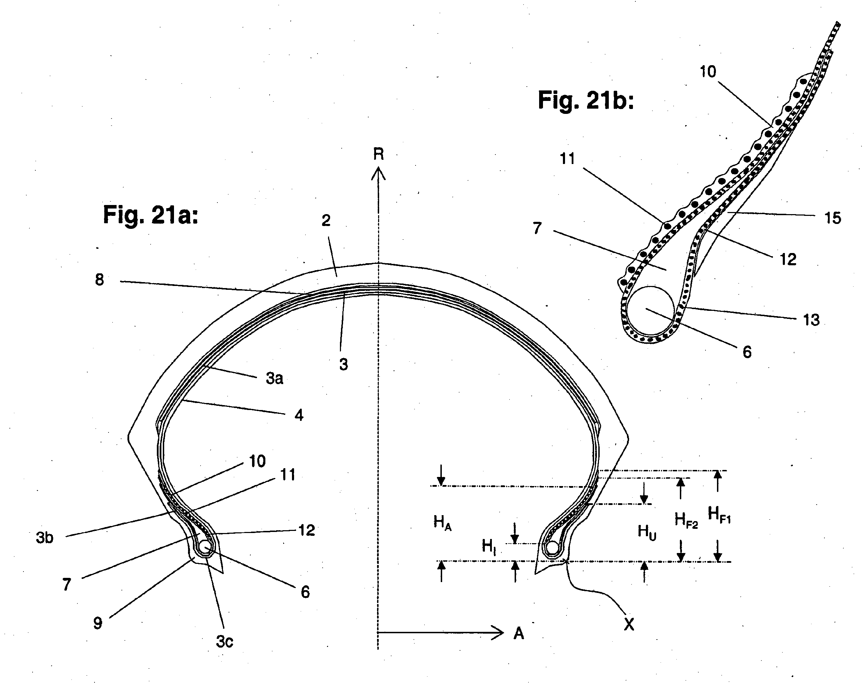

Beispielhaft ist dies in den Fig.20a und 20b am Beispiel von Fahrzeugluftreifen für Personenkraftwagen und in den Fig.21a und 21b am Beispiel von Fahrzeugluftreifen für Motorräder und Motorroller dargestellt.

Fig. 20a zeigt einen Fahrzeugluftreifen für Personenkraftwagen für eine Tiefbettfelge in einem auf einer korrespondierenden - nicht dargestellten - Felge montierten, unbelasteten Betriebszustand. Fig. 20a zeigt schematisch den Fahrzeugluftreifen für Personenkraftwagen im Querschnitt, wobei im Wulstbereich auch die Felgenschulter eine Sitzfläche aufweist mit einer Neigung zur Axialen A von 5°. Die Bezeichnungen der Bauteile sind hierbei identisch zu denen in Fig. 1. Der grundsätzliche Aufbau des Fahrzeugluftreifens entspricht dem bereits im Zusammenhang mit den Fig. 1 bis 19 erläuterten Aufbau und den in deren Zusammenhang dargelegten unterschiedlichen Ausführungsbeispielen. Von den Bauteilen des Fahrzeugluftreifens für Personenkraftwagen sind ein Laufstreifen 2, eine Karkasseinlage 3, ein mehrlagiger Gürtel 8 mit Gürtelkantenbandage, eine einlagige Innenschicht 4, zwei Seitenwände 5 und an jeder Seitenwand je ein Wulstkern 6, ein Kernprofil 7 und ein Wulstband 9 dargestellt. Die Karkasseinlage 3 weist insbesondere Textilkorde als Festigkeitsträger auf, die im rechten Winkel bzw. im Wesentlichen im rechten Winkel zur Umfangsrichtung des Reifens und somit in radialer Richtung R des Reifens verlaufen. Der Wulstkern 6 besteht aus Stahlkorden, das radial außerhalb des Wulstkernes 6 angeordnete und auf diesem sitzende Kernprofil 7 besteht aus einer Gummimischung mit einem hohen Elastizitätsmodul und kann - wie dargestellt - einteilig oder auch - wie nicht dargestellt - mehrteilig aufgeführt sein und somit aus Gummimischungen unterschiedlicher Elastizitätsmoduli bestehen.

Wie in Figur 20a dargestellt ist, erstreckt sich die Karkasseinlage 3 mit ihrem Hauptteil 3a vom Gürtel her kommend nach radial innen durch die Seitenwand entlang der axial inneren Seite des Kernreiters 7 und des Wulstkerns 6, ist unter Bildung eines Zwischenabschnitts 3c auf der radial inneren Seite des Wulstkernes 6 um den Wulstkern 6 nach axial außen herumgeführt und um den Wulstkern 6 nach radial außen herumgeschlagen und erstreckt sich mit ihrem Umschlag 3b auf der axialen Außenseite des Wulstkernes 6 und des Kernreiters 7 in direktem Berührkontakt zum Kernreiter 7 bis in einen radialen Abstand $H_U$ vom Felgeneckpunkt X.

Auf der axialen Innenseite des Kernreiters 7 ist zwischen Kernreiter 7 und dem Hauptteil 3a der Karkasse 3 eine Wulstverstärkungslage 10 ausgebildet. Die Wulstverstärkungslage 10 erstreckt sich dabei von einer radial inneren Position im radialen Abstand $H_I$ zum Felgeneckpunkt X bis zu einer radial äußeren Position im radialen Abstand $H_A$ vom Felgeneckpunkt X. Die Wulstverstärkungslage 10 ist aus einem in Umfangsrichtung über den gesamten Reifen erstreckten, in einer Gummimischung eingebetteten, von radial innen beginnend bei der radialen Höhe $H_I$ nach radial außen bis zur radialen Höhe $H_A$ erstreckt spiralig aufgewickelten, kontinuierlichen Festigkeitsträger 11 ausgebildet. Die Wulstverstärkungslage 10 ist dabei längs ihrer radialen Erstreckung in direktem Berührkontakt zum Hauptteil 3a der Karkasseinlage 3.

Wie in Figur 20a dargestellt ist, ist auch bei dieser Ausführung radial innerhalb des Wulstkerns 6 wenigstens ein weiterer über den gesamten Umfang des Fahrzeugreifens erstreckter Wulstverstärkungsstreifen 12 ausgebildet, der sich in axialer Richtung über die gesamte axiale Erstreckung des Wulstkerns 6 erstreckt und der zu beiden axialen Außenseiten des Wulstkerns 6 jeweils nach radial außen umgeschlagen ist, wobei der erste Umschlag sich bis in eine radiale Erstreckungshöhe $H_{F1}$ vom Felgerieckpunkt X und der zweite Umschlag bis in eine radiale Erstreckungshöhe $H_{F2}$ vom Felgeneckpunkt X erstreckt. Die Maße, $H_{F2}$ und $H_U$ sind beispielsweise so gewählt, dass $H_{F1} \geq H_{F2} > H_U$. $H_A$ ist beispielsweise so gewählt, dass $H_A < H_{F1}$ und im gezeigten Ausführungsbeispiel auch $H_A < H_{F2}$

Der Wulstverstärkungsstreifen 12 ist mit seinem ersten Umschlag nach radial innen gesehen ausgehend von der radialen Erstreckungshöhe $H_{F1}$ vom Felgeneckpunkt X zwischen Hauptteil 3a der Karkasse und Seitenwandgummi 5 bis in die radiale Erstreckungshöhe $H_{F2}$ vom Felgeneckpunkt X, von dort weiter bis in die radiale Erstreckungshöhe $H_A$ vom Felgeneckpunkt X zwischen Hauptteil 3a der Karkasse und zweitem Umschlag des Wulstverstärkungsstreifens 12 in direktem Berührkontakt zum Hauptteil 3a der Karkasse und zum zweiten Umschlag des Wulstverstärkungsstreifens 12, von dort weiter bis in die radiale Erstreckungshöhe $H_I$ vom Felgeneckpunkt X zwischen Wulstverstärkungslage 10 und Kernreiter 7 in direktem Berührkontakt zum Kernreiter 7 und zur Wulstverstärkungslage 10 erstreckt, und radial innerhalb der Erstreckungshöhe $H_I$ vom Felgeneckpunkt X und auf der radial inneren Seite des Wulstkern 6 in direktem Berührkontakt zum Wulstkern 6 und zur Karkasse eng um den Wulstkern 6 gelegt und auf der axialen Außenseite des Wulstkerns 6 nach radial außen bis in die radiale Erstreckungshöhe $H_U$ vom Felgeneckpunkt X zwischen dem Karkassenumschlag 3b und dem Kernreiter 7 in direktem Berührkontakt zu dem Karkassenumschlag 3b und dem Kernreiter 7 und im Anschluss daran bis in die radiale Erstreckungshöhe $H_{F2}$ vom Felgeneckpunkt X zwischen dem Seitenwandgummi 5 und dem ersten Umschlag des Wulstverstärkungsstreifens 12 in direktem Berührkontakt zum ersten Umschlag des Wulstverstärkungsstreifens 12 erstreckt ausgebildet.

Fig. 20b zeigt ein aus Wulstkern 6, Kernprofil 7, Wulstverstärkungsstreifen 12 mit dem Festigkeitsträger 13 und Wulstverstärkungslage 10 mit dem Festigkeitsträger 11 vorkonfektioniertes Bauteil, das modular im Herstellungsprozess des Fahrzeugluftreifens eingesetzt wird.

Der Wulstverstärkungsstreifen 12 ist - wie im Zusammenhang mit den dargestellten oder erläuterten Ausführungen im Zusammenhang mit Nutzfahrzeugluftreifen angegeben aus textilen Festigkeitsträgern 17 bekannter Art ausgebildet.

Fig. 21a zeigt einen Fahrzeugluftreifen für Motorräder oder Motorroller für eine Tiefbettfelge in einem auf einer korrespondierenden - nicht dargestellten - Felge montierten, unbelasteten Betriebszustand. Fig. 21a zeigt schematisch den Fahrzeugluftreifen für Motorräder oder Motorroller im Querschnitt. Die Bezeichnungen der Bauteile sind hierbei identisch zu denen in Fig. 1. Der grundsätzliche Aufbau des Fahrzeugluftreifens entspricht dem bereits im Zusammenhang mit den Fig. 1 bis 20 erläuterten Aufbau und den in deren Zusammenhang dargelegten unterschiedlichen Ausführungsbeispielen. Von den Bauteilen des Fahrzeugluftreifens für Personenkraftwagen sind ein Laufstreifen 2, eine Karkasseinlage 3, ein mehrlagiger Gürtel 8, eine einlagige Innenschicht 4, zwei Seitenwände 5 und an jeder Seitenwand je ein Wulstkern 6, ein Kernprofil 7 und ein Wulstband 9 dargestellt. Die Karkasseinlage 3 weist insbesondere Textilkorde als Festigkeitsträger auf, die im rechten Winkel bzw. im Wesentlichen im rechten Winkel zur Umfangsrichtung des Reifens und somit in radialer Richtung R des Reifens verlaufen. Der Wulstkern 6 besteht aus Stahlkorden oder aus anderen geeigneten Korden bekannter Art mit hoher Zugfestigkeit, das radial außerhalb des Wulstkernes 6 angeordnete und auf diesem sitzende Kernprofil 7 besteht aus einer Gummimischung mit einem hohen Elastizitätsmodul und kann - wie dargestellt - einteilig oder auch - wie nicht dargestellt - mehrteilig ausgeführt sein und somit aus Gummimischungen unterschiedlicher Elastizitätsmoduli bestehen.

Wie in Figur 21a dargestellt ist, erstreckt sich die Karkasseinlage 3 mit ihrem Hauptteil 3a vom Gürtel her kommend nach radial innen durch die Seitenwand entlang der axial inneren Seite des Kernreiters 7 und des Wulstkerns 6, ist unter Bildung eines Zwischenabschnitts 3c auf der radial inneren Seite des Wulstkernes 6 um den Wulstkern 6 nach axial außen herumgeführt und um den Wulstkern 6 nach radial außen herumgeschlagen und erstreckt sich mit ihrem Umschlag 3b auf der axialen Außenseite des Wulstkernes 6 und des Kernreiters 7 in direktem Berührkontakt zum Kernreiter 7 bis in einen radialen Abstand $H_U$ vom Felgeneckpunkt X.

Auf der axialen Innenseite des Kernreiters 7 ist zwischen Kernreiter 7 und dem Hauptteil 3a der Karkasse 3 eine Wulstverstärkungslage 10 ausgebildet. Die Wulstverstärkungslage 10 erstreckt sich dabei von einer radial inneren Position im radialen Abstand $H_I$ zum Felgeneckpunkt X bis zu einer radial äußeren Position im radialen Abstand $H_A$ vom Felgeneckpunkt X. Die Wulstverstärkungslage 10 ist aus einem in Umfangsrichtung über den gesamten Reifen erstreckten, in einer Gummimischung eingebetteten, von radial innen beginnend bei der radialen Höhe $H_I$ nach radial außen bis zur radialen Höhe $H_A$ erstreckt spiralig aufgewickelten, kontinuierlichen Festigkeitsträger 11 ausgebildet. Die Wulstverstärkungslage 10 ist dabei längs ihrer radialen Erstreckung in direktem Berührkontakt zum Hauptteil 3a der Karkasseinlage 3.

Wie in Figur 21 a dargestellt ist, ist auch bei dieser Ausführung radial innerhalb des Wulstkerns 6 wenigstens ein weiterer über den gesamten Umfang des Fahrzeugreifens erstreckter Wulstverstärkungsstreifen 12 ausgebildet, der sich in axialer Richtung über die gesamte axiale Erstreckung des Wulstkerns 6 erstreckt und der zu beiden axialen Außenseiten des Wulstkerns 6 jeweils nach radial außen umgeschlagen ist, wobei der erste Umschlag sich bis in eine radiale Erstreckungshöhe $H_{F1}$ vom Felgeneckpunkt X und der zweite Umschlag bis in eine radiale Erstreckungshöhe $H_{F2}$ vom Felgeneckpunkt X erstreckt. Die Maße , $H_{F2}$ und $H_U$ sind beispielsweise so gewählt, dass $H_{F1} \geq H_{F2} > H_U$. $H_A$ ist beispielsweise so gewählt, dass $H_A < H_{F1}$ und im gezeigten Ausführungsbeispiel auch $H_A < H_{F2}$.

Der Wulstverstärkungsstreifen 12 ist mit seinem ersten Umschlag nach radial innen gesehen ausgehend von der radialen Erstreckungshöhe $H_{F1}$ vom Felgeneckpunkt X zwischen Hauptteil 3a der Karkasse und Seitenwandgummi 5 bis in die radiale Erstreckungshöhe $H_{F2}$ vom Felgeneckpunkt X, von dort weiter bis in die radiale Erstreckungshöhe $H_A$ vom Felgeneckpunkt X zwischen Hauptteil 3a der Karkasse und zweitem Umschlag des Wulstverstärkungsstreifens 12 in direktem Berührkontakt zum Hauptteil 3a der Karkasse und zum zweitem Umschlag des Wulstverstärkungsstreifens 12, von dort weiter bis in die radiale Erstreckungshöhe $H_I$ vom Felgeneckpunkt X zwischen Wulstverstärkungslage 10 und Kernreiter 7 in direktem Berührkontakt zum Kernreiter 7 und zur Wulstverstärkungslage 10 erstreckt, und radial innerhalb der Erstreckungshöhe $H_I$ vom Felgeneckpunkt X und auf der radial inneren Seite des Wulstkern 6 in direktem Berührkontakt zum Wulstkern 6 und zur Karkasse eng um den Wulstkern 6 gelegt und auf der axialen Außenseite des Wulstkerns 6 nach radial außen bis in die radiale Erstreckungshöhe $H_U$ vom Felgeneckpunkt X zwischen dem Karkassenumschlag 3b und dem Kernreiter 7 in direktem Berührkontakt zu dem Karkassenumschlag 3b und dem Kernreiter 7 und im Anschluss daran bis in die radiale Erstreckungshöhe $H_{F2}$ vom Felgeneckpunkt X zwischen dem Seitenwandgummi 5 und dem ersten Umschlag des Wulstverstärkungsstreifens 12 in direktem Berührkontakt zum ersten Umschlag des Wulstverstärkungsstreifens 12 erstreckt ausgebildet.

Fig. 21b zeigt ein aus Wulstkern 6, Kernprofil 7, Wulstverstärkungsstreifen 12 mit dem Festigkeitsträger 13, zusätzlichem Gummiprofil 15 und Wulstverstärkungslage 10 mit dem Festigkeitsträger 11 vorkonfektioniertes Bauteil, das modular im Herstellungsprozess des Fahrzeugluftreifens eingesetzt wird.

Der Wulstverstärkungsstreifen 12 ist - wie im Zusammenhang mit den dargestellten oder erläuterten Ausführungen im Zusammenhang mit Nutzfahrzeugluftreifen angegeben aus textilen Festigkeitsträgern 13 bekannter Art ausgebildet.

**Bezugszeichenliste**

(Teil der Beschreibung)

| | |
|---|---|
| 1 | Felge |
| 2 | Laufstreifenprofil |
| 3 | Karkasse |
| 3a | Hauptteil der Karkasse |
| 3b | Umschlag der Karkasse |
| 3c | Zwischenabschnitt der Karkasse |
| 4 | Innenschicht |
| 5 | Seitenwand |
| 6 | Wulstkern |
| 7 | Kernreiter (Apex) |
| 8 | Gürtel |
| 9 | Wulstband |
| 10 | Wulstverstärkungslage |
| 11 | Festigkeitsträger |
| 12 | Verstärkungsstreifen |
| 12a | Verstärkungsstreifen |
| 12b | Verstärkungsstreifen |
| 13 | Festigkeitsträger |
| 13a | Festigkeitsträger |
| 13b | Festigkeitsträger |
| 14 | Umfangsunterbrechung |
| 15 | Zusätzliches Gummiprofil |

**Patentansprüche**

1. Fahrzeugreifen - insbesondere Fahrzeugluftreifen - mit einem Laufstreifen, mit einem radial innerhalb des Laufstreifens ausgebildeten Wulstbereich mit Wulstkern zur Sicherung des Fahrzeugreifens auf einer korrespondierend ausgebildeten Sitzfläche einer Felge - insbesondere mit radial außerhalb des Wulstkerns ausgebildetem Kernreiter - und mit einer Wulstverstärkungslage (10), die in dem Befestigungsbereich ausgebildet ist, wobei die Wulstverstärkungslage (10) über den Umfang des Fahrzeugreifens erstreckt ausgebildet ist,

   wobei radial innerhalb des Wulstkerns (6) wenigstens ein weiterer - insbesondere über den gesamten Umfang des Fahrzeugreifens erstreckter - Wulstverstärkungsstreifen (12) ausgebildet ist, der sich in axialer Richtung A über die gesamte axiale Erstreckung des Wulstkerns (6) erstreckt und der zu beiden axialen Außenseiten des Wulstkerns (6) jeweils nach radial außen umgeschlagen ist, wobei der erste Umschlag sich bis in eine radiale Erstreckungshöhe $H_{F1}$ vom Felgeneckpunkt X und der zweite Umschlag bis in eine radiale Erstreckungshöhe $H_{F2}$ vom Felgeneckpunkt X erstreckt,

   **dadurch gekennzeichnet,**

   **dass der Verstärkungsstreifen (12) mit einem ersten Verstärkungsstreifen (12a) und mit einem zweiten Verstärkungsstreifen (12b) ausgebildet ist und**

**dass** die Wulstverstärkungslage (10) mit wenigstens einem spiralig von radial innen nach radial außen ausgebildeten in Umfangsrichtung gewickelt angeordneten Festigkeitsträger ausgebildet ist, wobei die Wulstverstärkungslage (10) zwischen dem ersten Umschlag eines ersten Verstärkungsstreifens (12a) und dem ersten Umschlag eines zweiten Verstärkungsstreifens (12b) ausgebildet ist.

2. Fahrzeugreifen gemäß den Merkmalen von Anspruch 1,
wobei sowohl die radiale Erstreckungshöhe $H_{F_1}$ vom Felgeneckpunkt X als auch die radiale Erstreckungshöhe $H_{F_2}$ vom Felgeneckpunkt X radial außerhalb des radialen Abstandes der radial Äußeren Erstreckung des Wulstkerns (6) vom Felgeneckpunkt X ausgebildet ist.

3. Fahrzeugreifen gemäß den Merkmalen von Anspruch 1 oder 2,
wobei der erste Umschlag **des ersten Verstärkungsstreifens (12a)** axial benachbart zur Wulstverstärkungslage (10) ausgebildet ist.

4. Fahrzeugreifen gemäß den Merkmalen von Anspruch 3,
wobei der erste Umschlag **des ersten Verstärkungsstreifens (12a)** in direktem Berührkontakt zur Wulstverstärkungslage (10) ausgebildet ist.

5. Fahrzeugreifen gemäß, den Merkmalen von einem oder mehreren der vorangegangenen Ansprüche,
wobei der erste Umschlag **des ersten Verstärkungsstreifens (12a)** zumindest radial innerhalb des Wulstkerns (6) in direktem Berührkontakt zum Wulstkern (6) ausgebildet ist.

6. Fahrzeugreifen gemäß den Merkmalen von einem oder mehreren der vorangegangenen Ansprüche,
wobei der erste Umschlag **des ersten Verstärkungsstreifens (12a)** in direktem Berührkontakt zum Wulstkern (6) und zum Kernreiter (7) ausgebildet ist.

7. Fahrzeugreifen gemäß den Merkmalen von einem oder mehreren der vorangegangenen Ansprüche,
wobei der zweite Umschlag **des ersten Verstärkungsstreifens (12a)** in direktem Berührkontakt zum Wulstkern (6) und zum Kernreiter (7) ausgebildet ist.

8. Fahrzeugreifen gemäß den Merkmalen von einem oder mehreren der vorangegangenen Ansprüche,
wobei der erste Umschlag **des ersten Verstärkungsstreifens (12a)** auf der axialen Innenseite des Wulstkerns (6) im Fahrzeugreifen angeordnet ist.

9. Fahrzeugreifen gemäß den Merkmalen von einem oder mehreren der vorangegangenen Ansprüche,
wobei der erste Umschlag **des ersten Verstärkungsstreifens (12a)** zwischen der Wulstverstärkungslage (10) und dem Wulstkern (6) ausgebildet ist.

10. Fahrzeugreifen gemäß den Merkmalen von einem oder mehreren der Ansprüche 1 bis 8,
wobei die Wulstverstärkungslage (10) zwischen dem ersten Umschlag **des zweiten Verstärkungsstreifens (12b)** und dem Wulstkern (6) ausgebildet ist.

11. Fahrzeugreifen gemäß den Merkmalen von einem oder mehreren der vorangegangenen Ansprüche,
wobei der Wulstverstärkungsstreifen **(12a, 12b)** aus einer Lage von in Kautschuk oder Gummi eingebetteten - insbesondere textilen - Festigkeitsträgern (13) ausgebildet ist.

12. Fahrzeugreifen gemäß den Merkmalen von Anspruch **11**,
wobei die Festigkeitsträger (13) unter einen Steigungswinkel von 35 ° bis 55 ° zur Umfangsrichtung U des Reifens verlaufend ausgebildet sind.

13. Fahrzeugreifen gemäß den Merkmalen von einem oder mehreren der vorangegangenen Ansprüche,
wobei die Wulstverstärkungslage (10) mit wenigstens einem spiralig von radial innen nach radial außen ausgebildeten in Umfangsrichtung gewickelt angeordneten Festigkeitsträger (11) ausgebildet ist, wobei der Festigkeitsträger (11) ein in Umfangsrichtung segmentiert ausgebildeter Festigkeitsträger (11) ist.

14. Fahrzeugreifen gemäß den Merkmalen von einem oder mehreren der vorangegangenen Ansprüche,
wobei die Wulstverstärkungslage (10) mit wenigstens einem spiralig von radial innen nach radial außen ausgebildeten in Umfangsrichtung gewickelt angeordneten Festigkeitsträger (11) ausgebildet ist, wobei in einem ersten radial inneren

Erstreckungsbereich des Verstärkungsmaterials ein kontinuierlich und in Umfangsrichtung durchgehend ausgebildeter Festigkeitsträger (11) gewickelt ist und bei dem in einem zweiten radial äußeren Erstreckungsbereich des Verstärkungsmaterials ein in Umfangsrichtung segmentiert ausgebildeter Festigkeitsträger (11) gewickelt ist.

15. Fahrzeugreifen gemäß den Merkmalen von einem oder mehreren der vorangegangenen Ansprüche, wobei der Festigkeitsträger (11) der Wulstverstärkungslage (10) ein metallischer Festigkeitsträger (11) ist.

16. Fahrzeugreifen gemäß den Merkmalen von einem oder mehreren der vorangegangenen Ansprüche, bei dem wenigstens eine Karkassenlage (3) - insbesondere radialer Bauart - mit parallelen in Kautschuk- oder Gummimaterial eingebetteten Festigkeitsträgern um den Wulstkern (6) umgeschlagen ausgebildet ist, wobei der Wulstverstärkungsstreifen (12) zwischen der Karkassenlage (3) und dem Wulstkern (6) angeordnet ist.

17. Fahrzeugreifen gemäß den Merkmalen von Anspruch 16, wobei die Karkasse (3) mit ihrem Hauptteil (3a) in der Reifenseitenwand zwischen Reifenschulter und der radialen Innenseite des Wulstkern (6) radial nach innen erstreckt und dabei im radialen Erstreckungsbereich des Wulstkerns (6) und - insbesondere des Kernreiters (7) - entlang der axialen Innenseite des Wulstkerns (6) und - insbesondere des Kernreiters (7) - verlaufend ausgebildet ist, und wobei die Karkasse (3) mit ihrem Umschlag (3b) entlang der axialen Außenseite des Wulstkerns (6) und - insbesondere des Kernreiters (7) - nach radial außen erstreckt ausgebildet ist.

18. Fahrzeugreifen gemäß den Merkmalen von Anspruch 16 oder 17, wobei der Umschlag (3b) der Karkasse (3) auf der Oberfläche des Kernreiters (7) endet mit einem Abstand von größer Null zum Hauptteil (3a) der Karkasse (3).

19. Fahrzeugreifen gemäß den Merkmalen von Anspruch 16, 17 oder 18, wobei die Festigkeitsträger der Karkassenlage Monofilamente oder Multifilamente aus textilen oder metallischem Material - insbesondere aus Stahl - sind.

**Claims**

1. Vehicle tire - in particular a pneumatic vehicle tire - with a tread rubber, with a bead region formed radially inside the tread rubber and with a bead core for securing the vehicle tire on a correspondingly formed seat of a rim - in particular with a bead filler formed radially outside the bead core - and with a bead reinforcing ply (10), which is formed in the fastening region, the bead reinforcing ply (10) being formed extending over the circumference of the vehicle tire, there being formed radially inside the bead core (6) at least one further bead reinforcing strip (12) - in particular made to extend over the entire circumference of the vehicle tire - which further strip extends in the axial direction A over the entire axial extent of the bead core (6) and is respectively turned back radially outward on both axial outer sides of the bead core (6), the first turned-back portion extending to a height of radial extent $H_{F1}$ from the vertex X of the rim and the second turned-back portion extending to a height of radial extent $H_{F2}$ from the vertex X of the rim, **characterized in that** the reinforcing strip (12) is formed with a first reinforcing strip (12a) and a second reinforcing strip (12b) and **in that** the bead reinforcing ply (10) the bead reinforcing ply (10) being formed between the first turned-back portion of a first reinforcing strip (12a) and the first turned-back portion of a second reinforcing strip (12b).

2. Vehicle tire according to the features of Claim 1, both the height of radial extent $H_{F1}$ from the vertex X of the rim and the height of radial extent $H_{F2}$ from the vertex X of the rim being formed radially outside the radial distance of the radially outer extent of the bead core (6) from the vertex X of the rim.

3. Vehicle tire according to the features of Claim 1 or 2, the first turned-back portion of the first reinforcing strip (12a) being formed axially adjacent the bead reinforcing ply (10).

4. Vehicle tire according to the features of Claim 3, the first turned-back portion of the first reinforcing strip (12a) being formed in direct contact with the bead reinforcing ply (10).

5. Vehicle tire according to the features of one or more of the preceding claims, the first turned-back portion of the first reinforcing strip (12a) being formed in direct contact with the bead core (6), at least radially inside the bead core (6).

6. Vehicle tire according to the features of one or more of the preceding claims, the first turned-back portion of the first reinforcing strip (12a) being formed in direct contact with the bead core (6) and with the bead filler (7).

7. Vehicle tire according to the features of one or more of the preceding claims, the second turned-back portion of the first reinforcing strip (12a) being formed in direct contact with the bead core (6) and with the bead filler (7).

8. Vehicle tire according to the features of one or more of the preceding claims, the first turned-back portion of the first reinforcing strip (12a) being arranged on the axial inner side of the bead core (6) in the vehicle tire.

9. Vehicle tire according to the features of one or more of the preceding claims, the first turned-back portion of the first reinforcing strip (12a) being formed between the bead reinforcing ply (10) and the bead core (6).

10. Vehicle tire according to the features of one or more of Claims 1 to 8, the bead reinforcing ply (10) being formed between the first turned-back portion of the second reinforcing strip (12b) and the bead core (6).

11. Vehicle tire according to the features of one or more of the preceding claims, the bead reinforcing strip (12a, 12b) being formed by a ply of strengthening supports (13) - in particular textile strengthening supports (13) - embedded in unvulcanized or vulcanized rubber.

12. Vehicle tire according to the features of Claim 11, the strengthening supports (13) being formed so as to extend at a helix angle of 35° to 55° in relation to the circumferential direction U of the tire.

13. Vehicle tire according to the features of one or more of the preceding claims, the bead reinforcing ply (10) being formed with at least one strengthening support (11) arranged such that it is wound in the circumferential direction, formed spirally from the inside outward in the radial sense, the strengthening support (11) being a strengthening support (11) that is of a segmented form in the circumferential direction.

14. Vehicle tire according to the features of one or more of the preceding claims, the bead reinforcing ply (10) being formed with at least one strengthening support (11) arranged such that it is wound in the circumferential direction, formed spirally from the inside outward in the radial sense, a strengthening support (11) that is formed continuously and uninterruptedly in the circumferential direction being wound in a first, radially inner region of the extent of the reinforcing material and a strengthening support (11) that is of a segmented form in the circumferential direction being wound in a second, radially outer region of the extent of the reinforcing material.

15. Vehicle tire according to the features of one or more of the preceding claims, the strengthening support (11) of the bead reinforcing ply (10) being a metallic strengthening support (11).

16. Vehicle tire according to the features of one or more of the preceding claims, in which at least one carcass ply (3) - in particular of a radial type of construction - is formed with parallel strengthening supports embedded in unvulcanized or vulcanized rubber material and wrapped around the bead core (6), the bead reinforcing strip (12) also being arranged between the carcass ply (3) and the bead core (6).

17. Vehicle tire according to the features of Claim 16, the carcass (3) extending radially inward with its main part (3a) in the tire sidewall between the tire shoulder and the radial inner side of the bead core (6) and thereby formed in the radial region of extent of the bead core (6) - and in particular of the bead filler - such that it extends along the axial inner side of the bead core (6) - and in particular of the bead filler (7) - and the carcass (3) being formed with its turned-back portion (3b) along the axial outer side of the bead core (6) - and in particular of the bead filler (7) - such that it is made to extend radially outward.

18. Vehicle tire according to the features of Claim 16 or 17, the turned-back portion (3b) of the carcass (3) ending on the surface of the bead filler (7) at a distance greater than zero from the main part (3a) of the carcass (3).

19. Vehicle tire according to the features of Claim 16, 17 or 18, the strengthening supports of the carcass ply being monofilaments or multifilaments of textile or metallic material - in particular of steel.

**Revendications**

1. Pneu de véhicule - en particulier pour véhicules utilitaires - avec une bande de roulement, avec une région de talon formée radialement à l'intérieur de la bande de roulement avec une tringle de talon pour la fixation du pneu de véhicule sur une face d'application de forme correspondante d'une jante - en particulier avec un onglet formé radialement à l'extérieur de la tringle de talon - et avec une couche de renforcement de talon (10), qui est formée dans la région de fixation, dans lequel la couche de renforcement de talon (10) est étendue sur le pourtour du pneu de véhicule, dans lequel au moins un autre ruban de renforcement de talon (12) - étendu en particulier sur tout le pourtour du pneu de véhicule - est formé radialement à l'intérieur de la tringle de talon (6), ruban qui s'étend en direction axiale A sur toute l'extension axiale de la tringle de talon (6) et qui est rabattu radialement vers l'extérieur chaque fois vers les deux côtés axiaux extérieurs de la tringle de talon (6), dans lequel le premier rabat s'étend jusqu'à une hauteur d'extension radiale $H_{F1}$ à partir du point X du col de la jante et le deuxième rabat s'étend jusqu'à une hauteur d'extension radiale $H_{F2}$ à partir du point X du col de la jante, **caractérisé en ce que** le ruban de renforcement (12) est réalisé avec un premier ruban de renforcement (12a) et avec un deuxième ruban de renforcement (12b) et **en ce que** la couche de renforcement de talon (10) est réalisée avec au moins un élément résistant enroulé en spirale de radialement intérieur à radialement extérieur en direction périphérique, dans lequel la couche de renforcement de talon (10) est formée entre le premier rabat d'un premier ruban de renforcement (12a) et le premier rabat d'un deuxième ruban de renforcement (12b).

2. Pneu de véhicule selon les caractéristiques de la revendication 1, dans lequel aussi bien la hauteur d'extension radiale $H_{F1}$ depuis le point X du col de jante que la hauteur d'extension radiale $H_{F2}$ depuis le point X du col de jante est formée radialement à l'extérieur de la distance radiale de l'extension extérieure radiale de la tringle de talon (6) depuis le point X du col de jante.

3. Pneu de véhicule selon les caractéristiques de la revendication 1 ou 2, dans lequel le premier rabat du premier ruban de renforcement (12a) est formé axialement au voisinage de la couche de renforcement de talon (10).

4. Pneu de véhicule selon les caractéristiques de la revendication 3, dans lequel le premier rabat du premier ruban de renforcement (12a) est formé en contact physique direct avec la couche de renforcement de talon (10).

5. Pneu de véhicule selon les caractéristiques d'une ou de plusieurs des revendications précédentes, dans lequel le premier rabat du premier ruban de renforcement (12a) est formé au moins radialement à l'intérieur de la tringle de talon (6) en contact physique direct avec la tringle de talon (6).

6. Pneu de véhicule selon les caractéristiques d'une ou de plusieurs des revendications précédentes, dans lequel le premier rabat du premier ruban de renforcement (12a) est formé en contact physique direct avec la tringle de talon (6) et avec l'onglet (7).

7. Pneu de véhicule selon les caractéristiques d'une ou de plusieurs des revendications précédentes, dans lequel le deuxième rabat du premier ruban de renforcement (12a) est formé en contact physique direct avec la tringle de talon (6) et avec l'onglet (7).

8. Pneu de véhicule selon les caractéristiques d'une ou de plusieurs des revendications précédentes, dans lequel le premier rabat du premier ruban de renforcement (12a) est agencé sur le côté intérieur axial de la tringle de talon (6) dans le pneu de véhicule.

9. Pneu de véhicule selon les caractéristiques d'une ou de plusieurs des revendications précédentes, dans lequel le premier rabat du premier ruban de renforcement (12a) est formé entre la couche de renforcement de talon (10) et la tringle de talon (6).

10. Pneu de véhicule selon les caractéristiques d'une ou de plusieurs des revendications 1 à 8, dans lequel la couche de renforcement de talon (10) est formée entre le premier rabat du deuxième ruban de renforcement (12b) et la tringle de talon (6).

11. Pneu de véhicule selon les caractéristiques d'une ou de plusieurs des revendications précédentes, dans lequel le ruban de renforcement de talon (12a, 12b) est formé d'une couche d'éléments résistants (13) - en particulier textiles - noyés dans le caoutchouc ou la gomme.

**12.** Pneu de véhicule selon les caractéristiques de la revendication 11, dans lequel les éléments résistants (13) sont formés avec une orientation formant un angle de pas de 35° à 55° par rapport à la direction périphérique U du pneu.

**13.** Pneu de véhicule selon les caractéristiques d'une ou de plusieurs des revendications précédentes, dans lequel la couche de renforcement de talon (10) est formée avec au moins un élément résistant (11) enroulé en spirale de radialement intérieur à radialement extérieur en direction périphérique, dans lequel l'élément résistant (11) est un élément résistant (11) réalisé de façon segmentée en direction périphérique.

**14.** Pneu de véhicule selon les caractéristiques d'une ou de plusieurs des revendications précédentes, dans lequel la couche de renforcement de talon (10) est formée avec au moins un élément résistant (11) enroulé en spirale de radialement intérieur à radialement extérieur en direction périphérique, dans lequel un élément résistant (11) est enroulé de façon continue et en continu en direction périphérique dans une première région d'extension radialement intérieure du matériau de renforcement et dans lequel un élément résistant (11) réalisé de façon segmentée en direction périphérique est enroulé dans une deuxième région d'extension radialement extérieure du matériau de renforcement (11).

**15.** Pneu de véhicule selon les caractéristiques d'une ou de plusieurs des revendications précédentes, dans lequel l'élément résistant (11) de la couche de renforcement de talon (10) est un élément résistant (11) métallique.

**16.** Pneu de véhicule selon les caractéristiques d'une ou de plusieurs des revendications précédentes, dans lequel au moins une couche de carcasse (3) - en particulier de type radial - est réalisée avec des éléments résistants parallèles noyés dans le matériau de caoutchouc ou de gomme rabattus autour de la tringle de talon (6), dans lequel le ruban de renforcement de talon (12) est agencé entre la couche de carcasse (3) et la tringle de talon (6).

**17.** Pneu de véhicule selon les caractéristiques de la revendication 16, dans lequel la carcasse (3) s'étend avec sa partie principale (3a) dans le flanc de pneu radialement vers l'intérieur entre l'épaulement du pneu et le côté intérieur radial de la tringle de talon (6) et elle est en l'occurrence formée de façon à s'étendre dans la région d'extension radiale de la tringle de talon (6) - en particulier de l'onglet (7) - le long du côté intérieur axial de la tringle de talon (6) et - en particulier de l'onglet (7) - et dans lequel la carcasse (3) est réalisée sous forme étendue radialement vers l'extérieur avec son rabat (3b) le long du côté extérieur axial de la tringle de talon (6) et - en particulier de l'onglet (7).

**18.** Pneu de véhicule selon les caractéristiques de la revendication 16 ou 17, dans lequel le rabat (3b) de la carcasse (3) se termine sur la surface de l'onglet (7) avec une distance supérieure à zéro par rapport à la partie principale (3a) de la carcasse (3).

**19.** Pneu de véhicule selon les caractéristiques de la revendication 16, 17 ou 18, dans lequel les éléments résistants de la couche de carcasse sont des monofilaments ou des multifilaments en un matériau textile ou métallique - en particulier en acier.

**Fig. 1:**

**Fig. 2:**

$\Delta H_2 = H_A - H_{LF}$

$\Delta H_1 = H_{F1} - H_I$

$B_{Kmax}$

EP 1 996 412 B1

Fig. 3:

Fig. 4:

**Fig. 5:**

$\Delta H_2 = H_A - H_{LF}$

$\Delta H_1 = H_{F1} - H_I$

$B_{Kmax}$

EP 1 996 412 B1

**Fig. 6:**

Fig. 7:

EP 1 996 412 B1

Fig. 8:

EP 1 996 412 B1

EP 1 996 412 B1

**Fig. 9:**

**Fig. 10:**

EP 1 996 412 B1

**Fig. 11:**

3
5
15
7
4
10
14
L
14
3a
11
14
14
14
12
$\Delta H_1 = H_{F1} - H_I$
13
6
9
3c
$H_I$
$H_{F1}$
$H_A$
$\Delta H_2 = H_A - H_{LF}$
$H_{LF}$
$H_U$
$H_{F2}$
$H_{KR}$
$H_{KB}$
3b
X
$B_{Kmax}$

**Fig. 12:**

Fig. 13:

**Fig. 14:**

EP 1 996 412 B1

**Fig. 15:**

EP 1 996 412 B1

**Fig. 16:**

EP 1 996 412 B1

**Fig. 17:**

$\Delta H_2 = H_A - H_{LF}$

$\Delta H_1 = H_{F1} - H_I$

$B_{Kmax}$

**Fig. 18:**

$\Delta H_2 = H_A - H_{LF}$

$\Delta H_1 = H_{F1} - H_I$

EP 1 996 412 B1

Fig. 19:

**Fig. 20a:**

**Fig. 20b:**

EP 1 996 412 B1

**Fig. 21b:**

**Fig. 21a:**

EP 1 996 412 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1174289 A2
- EP 1129870 B1
- US 2002189738 A1